# EUROPEAN PATENT APPLICATION

(11) **EP 3 690 826 A1**
(43) Date of publication of application: **05.08.2020**
(21) Application number: 19211921.2
(22) Date of filing: 14.03.2014
(51) Int. Cl.: G07B 15/02

(54) **ADVANCED PARKING AND INTERSECTION MANAGEMENT SYSTEM**

(30) Priority: 15.03.2013 US 201361790209 P; 30.12.2013 US 201314144161
(62) Divisional of application: 14769874.0
(71) Applicant: Subramanya, Balu, Darnestown, Maryland 20874 (US)
(72) Inventor: Subramanya, Balu, Darnestown, Maryland 20874 (US)
(74) Representative: Neumüller, Carl Mathias

(57) **Abstract**

A parking management system that facilitates motorist guidance, payment, violation detection, and enforcement using highly accurate space occupancy detection, unique vehicle identification and guidance displays is described. The system enables reduced time to find parking, congestion mitigation, accurate violation detection, and easier enforcement, and increased payment and enforcement revenues to cities. A system facilitating intersection management is also described having applicability to road intersections and railway crossings.

## Description

### CROSS-REFERENCE TO RELATED APPLICATIONS

This application is a continuation-in-part of U.S. Patent Application No. 14/144,161, filed December 30, 2013, which claims priority to U.S. Provisional Patent Application No. 61/746,842, filed on December 28, 2012, and U.S. Provisional Patent Application No. 61/790,209, filed on March 15, 2013, the entire contents of which are incorporated herein by reference.

This application claims priority to U.S. Provisional Patent Application No. 61/790,209, filed on March 15, 2013, the entire contents of which are incorporated herein by reference.

This application contains subject matter related to U.S. Patent Application No. 13/464,706, filed May 4, 2012, which claims priority to U.S. Provisional Application Nos. 61/549,029, filed October 19, 2011, and 61/638,173, filed April 25, 2012, the entire contents of which are incorporated herein by reference.

This application contains subject matter related to U.S. Patent Application No. 13/804,957, filed on March 14, 2013, which claims priority to U.S. Patent Application No. 13/464,706, filed May 4, 2012, which claims priority to U.S. Provisional Application Nos. 61/549,029, filed October 19, 2011, and 61/638,173, filed April 25, 2012, the entire contents of which are incorporated herein by reference.

### BACKGROUND OF THE DISCLOSURE

Many needs of parking management, especially in on-street parking environments in urban areas, are not being met with current technology. Parking management systems that include accurate space occupancy detection do not include unique vehicle identification for vehicle-based parking access and rate determination, motorist guidance, violation detection, and enforcement automation support. For example, there are situations where parking access and payment rates are determined by the individual vehicle or motorist, such as for a vehicle with handicapped access allowance, a governmental vehicle, a vehicle with a residential or visitor parking permit, etc.

Current surveillance and photo enforcement systems have limited usefulness due to significant power consumption, which limits such systems down to fixed infrastructure like dedicated or street poles. In some cases, large battery operated devices, though portable, are very difficult to use, transport, and operate. One reason for photo enforcement is to modify motorist behavior and reduce accident rates. However, having cameras in fixed locations, where motorists can get used to them, or the cameras are bulky such that the cameras are highly visible often negates these motorist behavior modification benefits. Also, the cameras may be placed at locations that are most suitable for fixed infrastructure (such as access to power and communications systems) rather than for actual traffic engineering needs (such as accident prone locations where the need to constantly measure motorist behavior is needed). These are issues for today's photo enforcement technology and a significant reason for the poor performance of photo enforcement programs in terms of reducing crash rates and achieving crash rate reduction benefits that are commensurate with the total public and governmental expenditure on such programs.

These and other drawbacks exist.

### SUMMARY OF THE DISCLOSURE

An exemplary embodiment includes a parking management system having a roadside unit that includes a vehicle occupancy sensor with a zone of detection that corresponds to an individual parking space; a first radio-frequency (RF) transceiver including a first antenna configured to substantially radiate towards the individual parking space that is configured to communicate with an in-vehicle transceiver; a second antenna configured to substantially radiate in a direction of one or more gateways, cellular towers, or parking meters, the direction supporting communication between the second antenna and the one or more of gateways, cellular towers, servers, or parking meters; and a guidance display indicating a number of parking spaces available in a given zone or direction, wherein the guidance display is updated based on occupancy information for each individual parking space collected by the roadside unit. The parking management system may further have an imaging camera system, including at least one imaging sensor, for collecting evidence of parking violations that has an area of coverage including a plurality of parking spaces. The embodiment may further include an in-vehicle device, having a battery operated RF transceiver, that is configured to communicate with the roadside unit, transmitting a periodic beacon with encoded data that is received by the roadside unit may be a part of the parking management sensor. The vehicle occupancy sensor may be a radar sensor including one of a time of flight radar sensor or a frequency modulated continuous wave (FMCW) radar sensor.

Another exemplary embodiment includes intersection traffic management system having at least one first radar sensor, including a time of flight or FMCW radar sensor, positioned upstream of an approach to an intersection near locations where vehicle queues can form to detect the vehicle queue length of queues and clearance time of the detection includes one or more of vehicle count, vehicle type, and vehicle classification data; an intersection controller wirelessly coupled with the at least one first radar sensor, either directly or through a gateway, to receive information regarding the vehicle queue to calculate a clearance time based on the received information; and the intersection controller being configured to control a status of one or more signals at the intersection and sequence the one or more signals using the information provided by the at least one radar sensor to optimally route traffic through the intersection. The intersection traffic management system may further include at least one second radar sensor positioned downstream of exits from the intersection to measure clearance distances and intersection clearance time, as well as an intersection video queue detection camera that is communicatively coupled to the intersection controller, and wherein the intersection controller is configured to combine data from the at least one first radar sensor located upstream, the at least one second radar sensor located downstream, and the intersection video queue detection camera to estimate the length of queues and clearance time for the intersection.

Another exemplary embodiment includes a railway crossing intersection management system having a first sensor, that is a time of flight, FMCW, or Doppler radar sensor, configured to detect a train approaching a railway crossing intersection, the first sensor being installed in a location corresponding to at least one direction of train travel on a railway track; a second sensor, comprising a time of flight or FMCW radar, optical, infrared, or thermal sensor, configured to detect vehicles, persons, or objects at the intersection; a processor, that is configured to receive information from the first sensor and the second sensor, and that is further configured to calculate a potential access conflict or a collision possibility; and one or more signals, located at the intersection, including at least one of a auditory signal and a visual signal, that is directed towards the railway crossing intersection, wherein the at least one auditory or visual signal includes a first auditory or visual signal that is generated when a train is approaching the railway crossing intersection and no access conflict or potential collision is detected and a second auditory or visual signal that is generated when an access conflict or potential collision is detected.

These and various other embodiments and advantages of the various embodiments will become apparent from the following detailed description, taken in conjunction with the accompanying drawings, illustrating by way of example the principles of the various exemplary embodiments.

### BRIEF DESCRIPTION OF THE DRAWINGS

Figure 1 depicts example parking space geometries with occupancy and vehicle identification sensors collocated with pole mount and curb mount configurations in accordance with an exemplary embodiment.
Figure 2 depicts example parking space geometries with occupancy and vehicle identification sensors in a single space and dual space configuration in accordance with an exemplary embodiment.
Figure 3 depicts an example of parking space geometry with the occupancy and vehicle identification sensor integrated with a parking meter in accordance with an exemplary embodiment.
Figure 4 depicts a schematic block diagram of a roadside unit in accordance with an exemplary embodiment.
Figure 5 depicts a block diagram of a roadside transceiver with an interface to a broad spectrum radar and switched dual antenna in accordance with an exemplary embodiment.
Figure 6 depicts a block diagram of an in-vehicle device in accordance with an exemplary embodiment.
Figure 7 depicts a schematic block diagram of an in-vehicle unit with accelerometer and GPS capability in accordance with an exemplary embodiment.
Figure 8 depicts a schematic block diagram of an in-vehicle unit with marker detection and wake-up capability in accordance with an exemplary embodiment.
Figure 9 depicts a schematic block diagram of an in-vehicle device with a harvested energy antenna to fully or partially power the device in accordance with an exemplary embodiment.
Figure 10 depicts a method of vehicle sensing or identification with a power conserving cycle in accordance with an exemplary embodiment.
Figure 11A depicts an unmanned crossing in accordance with an exemplary embodiment.
Figure 11B depicts an intersection management system in accordance with an exemplary embodiment.
Figure 12A depicts an on-street parking system with wireless sensors in accordance with an exemplary embodiment.
Figure 12B depicts a block diagram of communication between devices in a parking system in accordance with an exemplary embodiment.
Figure 13 depicts a schematic representation of a subterranean parking occupancy system in accordance with an exemplary embodiment.
Figure 14 depicts a schematic block diagram of a collocated roadside unit with gateway, guidance displays (flip segment, e-ink, etc.) and imaging cameras for audit and secondary evidence collection in accordance with an exemplary embodiment.
Figure 15 depicts a pole mounted guidance display in accordance with an exemplary embodiment.
Figure 16 depicts a multi-digit guidance display in a parking lot in accordance with an exemplary embodiment.
Figure 17 depicts a block diagram of a gateway with an integrated guidance display in accordance with an exemplary embodiment.
Figure 18 depicts example placement of guidance displays, optionally collocated with gateways and cameras at each approach to an intersection, such that motorists seeking an open parking space can make informed decisions in accordance with an exemplary embodiment.
Figure 19 depicts a portable, solar powered surveillance camera in accordance with an exemplary embodiment.
Figure 20 depicts a block diagram of a surveillance camera in accordance with an exemplary embodiment.
Figure 21 depicts a street sweeper photo enforcement application in accordance with an exemplary embodiment.
Figure 22 depicts a surveillance camera mounted on a vehicle in accordance with an exemplary embodiment.
Figure 23 depicts a process flow for a surveillance camera subsystem in accordance with an exemplary embodiment.
Figure 24 depicts a schematic block diagram of a wireless boot control and management device in accordance with an exemplary embodiment.

### DETAILED DESCRIPTION OF THE DISCLOSURE

The following description is intended to convey a thorough understanding of the embodiments described by providing a number of specific embodiments and details of an advanced parking management system. It should be appreciated, however, that the present invention is not limited to these specific embodiments and details, which are exemplary only. It is further understood that one possessing ordinary skill in the art, in light of known systems and methods, would appreciate the use of the invention for its intended purposes and benefits in any number of various embodiments, depending on specific design and other needs.

While a single illustrative block, module or component is shown, these illustrative blocks, modules or components may be multiplied for various applications or different application environments. In addition, the modules or components may be further combined into a consolidated unit. The modules and/or components may be further duplicated, combined and/or separated across multiple systems at local and/or remote locations. For example, some of the modules or functionality associated with the modules may be supported by a separate application or platform. Other implementations and architectures may be realized. It should be appreciated that embodiments described may be integrated into and run on a computer, which may include a programmed processing machine which has one or more processors. Such a processing machine may execute instructions stored in a memory to process the data and execute the methods described herein.

The logic herein described may be implemented by hardware, software, firmware, and/or a combination thereof. In embodiments where the logic is implemented using software, upgrades and other changes may be performed without hardware changes. The software may be embodied in a non-transitory computer readable medium.

The description herein may contain reference to wired and wireless communications paths. These wired and wireless communications paths may include one or more of a fiber optics network, a passive optical network, a cable network, an Internet network, a satellite network, a wireless LAN, a Global System for Mobile Communication ("GSM"), a Personal Communication Service ("PCS"), a Personal Area Network ("PAN"), Wireless Application Protocol (WAP), Multimedia Messaging Service (MMS), Enhanced Messaging Service (EMS), Short Message Service (SMS), Time Division Multiplexing (TDM) based systems, Code Division Multiple Access (CDMA) based systems, D-AMPS, Wi-Fi, Fixed Wireless Data, IEEE 802.11b, 802.15.1, 802.11n and 802.11g or any other wired or wireless network for transmitting and receiving a data signal. In various embodiments, these wired and wireless communications paths, may include, without limitation, telephone lines, fiber optics, IEEE Ethernet 902.3, a wide area network ("WAN"), a local area network ("LAN"), or a global network such as the Internet. Also these paths may support an Internet network, a wireless communication network, a cellular network, or the like, or any combination thereof. The communication paths may further include one network, or any number of the exemplary types of networks mentioned above, operating as a stand-alone network or in cooperation with each other which may use one or more protocols of one or more network elements to which they are communicatively coupled. Each network may translate to or from other protocols to one or more protocols of network devices. Although each path may be depicted as a single path, it should be appreciated, the path or network may comprise a plurality of interconnected networks or paths, such as, for example, the Internet, a service provider's network, a cable television network, corporate networks, and home networks.

Exemplary methods are provided herein, as there are a variety of ways to carry out the method disclosed herein. The methods depicted in the Figures may be executed or otherwise performed by one or a combination of various systems, such as described herein. Each block shown in the Figures represents one or more processes, methods, and/or subroutines carried out in the exemplary methods. Each block may have an associated processing machine or the blocks depicted may be carried out through one processor machine. Furthermore, while the steps may be shown in a particular order, it should be appreciated that the steps may be conducted in a different order.

A well-managed parking system requires accurate unique vehicle identification for vehicle based parking access and rate determination, motorist guidance, violation detection, and enforcement automation support. The disclosed embodiments enable advanced parking management features in a meter-less configuration, thereby potentially avoiding a large portion of capital and operating expenses to cities (in parking meters and the like). The disclosed embodiments make it possible to accurately and uniquely identify stationery or moving vehicles from very low power infrastructure components and provide on-street dynamic signage and guidance to motorists, take camera images from multiple angles to provide secondary revenue collection as well as enforcement evidence, and automation of booting processes for violator vehicles.

Exemplary embodiments may be suited for situations and/or environments where a vehicle needs to be uniquely identified in order to apply vehicle specific business rules for access grant, permitted length of stay, payments, discounts, accounting, etc., such as may be required for parking management or access control management; a vehicle traversing a roadway or at an access control point needs to be identified for surveillance and security purposes; a vehicle violating a traffic law needs to be identified for traffic photo enforcement purposes; or parking availability information needs to be shown to motorists for better parking management purposes; or detection and/or communication with vehicles for intersection or roadway management or to deliver information to vehicles, including autonomous, platoon, or specially authorized vehicles such as mass transit vehicles or emergency vehicles from roadside infrastructure. While other technologies for uniquely identifying a vehicle may exist, such as in a toll road application, these technologies are inaccurate and not suitable when there is a density of stationery vehicles and a vehicle needs to be identified in a specific spot such as in a parking space, or when the roadside system needs to consume very little power such as in a battery or solar powered system. Embodiments disclosed herein make it possible to accurately and uniquely identify stationery or moving vehicles from very low power infrastructure components. The embodiments also make it possible to have portable, low power surveillance and photo enforcement components, to provide on-street dynamic signage and guidance to motorists, and detect, identify and communicate with vehicles from roadside components, especially communication with autonomous, platoon, mass transit, or specially authorized vehicles from low power, battery operated roadway or roadside infrastructure components.

Exemplary embodiments may have a radio transceiver collocated with a directional time of flight radar sensor or another suitable vehicle occupancy sensor that has a defined zone of detection coinciding with a zone of interest, such as the expected location of a vehicle within a parking space, near an access control device, etc. The radio transceiver can have one or more antenna elements, at least one of which radiates in the direction of said zone of interest. The radio transceiver and the directional sensor may be collocated and electrically coupled via analog or digital communication means, including but not limited to TTL level signaling, serial or parallel data communication, analog signaling, or other suitable means.

The radio transceiver and the sensor, according to exemplary embodiments, may be collocated within the same enclosure and may share a common power supply or source, such as a battery. However, in various embodiments, the radio transceiver and the sensor can also be in nearby separate enclosures and electrically coupled to each other. The radio transceiver may be placed adjacent to the zone of detection, such as on a pole mount, attached to a parking meter or an access control device, on a nearby curb face or top surface, within the zone of detection in a subterranean configuration, etc. These locations are generally referred to as "roadside".

The system according to exemplary embodiments can further consist of an in-vehicle device or transceiver that is placed inside a vehicle. The in-vehicle device can have its own battery and an antenna element. In various embodiments, the in-vehicle device can be passive without its own power source. The in-vehicle device can be mounted at a convenient location, such as behind the windshield or the back glass of the vehicle or can be mounted on the exterior or the underside of the vehicle chassis at a suitable location. The underside mounting may be more suitable in areas where the corresponding parking sensor is buried in the ground in a subterranean configuration.

The collocation and integration with the parking space occupancy sensor serves multiple purposes. For example, the determination of the space occupancy change (such as when a vehicle enters or exits) can be used to power-up, wake-up, or trigger the radio transceiver. Also, the knowledge of the space occupancy change can be used to interpret the signals from the in-vehicle device. For example, in an embodiment where the in-vehicle device is an active device and transmits information as a periodic beacon, finding a new beacon coincident with a new vehicle arrival may make it highly probable that the new beacon belongs to the arriving vehicle. Conversely, if the occupancy sensor detects no change but a new beacon is picked up, then the sensor can keep that beacon as belonging to a nearby space and less likely it is from its own space. These techniques may allow the radio transceiver used for vehicle identification to be of higher power and a lower or different frequency than a broad spectrum radar occupancy detector and it may not be possible to localize the antenna coverage area as precisely as desired and adjacent spaces as well as vehicles on nearby road lanes may be picked up. Many applications identify a vehicle's location within a parking space or similar with a high degree of certainty, even if some applications can tolerate a small error in such location identification.

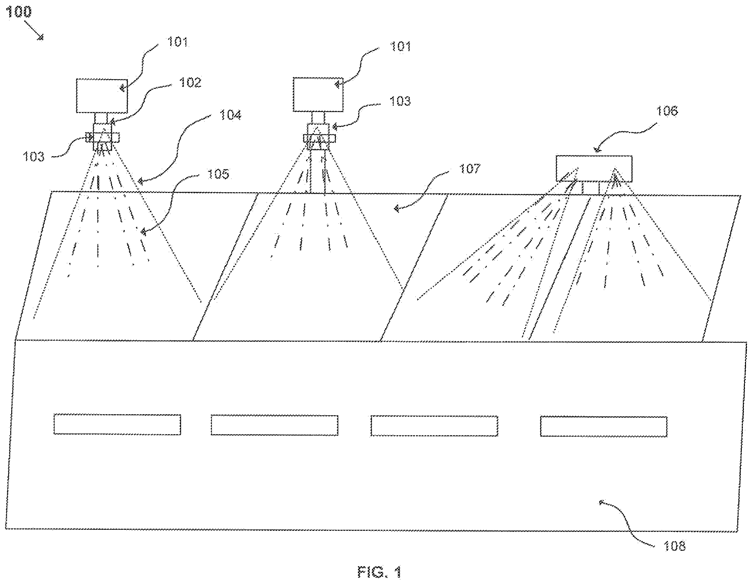

Figure 1 depicts example parking space geometries 100 with collocated occupancy and vehicle identification sensors in pole mount 103 and curb mount 106 configurations. Pole 102 is shown as a mounting location for the sensors and signage or a parking meter 101. The sensors 103 and 106 can have one or more detection zones 105 that may be used to cover a defined zone of interest 107. A vehicle identification transceiver with radiation 104 towards the zone of interest is also shown. Traffic lanes in the roadway 108 are also shown in an on-street parking configuration.

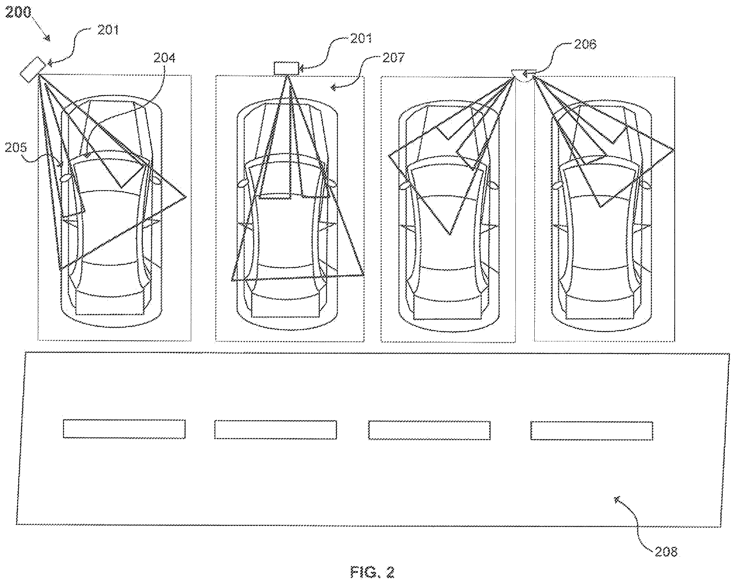

Figure 2 depicts example parking space geometries 200 with occupancy and vehicle identification sensors in a single space and dual space configuration. The spaces may be on-street, such as on a roadway 208. Example geometries of vehicle sensing zones 203 and a vehicle identification field of view 204 from a single space collocated sensor 201 with a parking space 207 are shown. Figure 2 also shows a geometry with a collocated double space sensor 206 wherein the sensor is mounted at the mutual boundary of the two adjoining spaces.

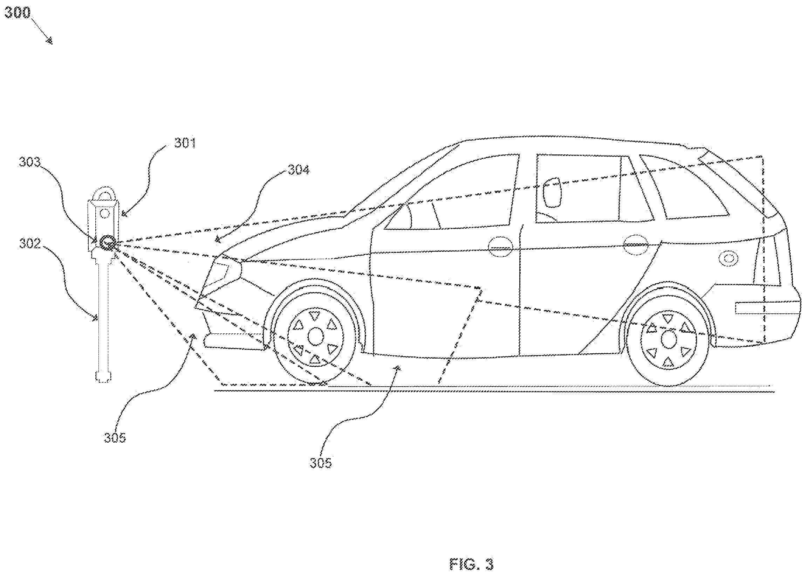

Figure 3 depicts an example parking space geometry 300 with the occupancy and vehicle identification sensors 303 integrated with a parking meter 301 and mounted on a pole 302. Vehicle occupancy sensing beams 305 with fields of view designed to encompass the zone of interest and a separate vehicle identification field of view 304 designed to target an in-vehicle device are shown.

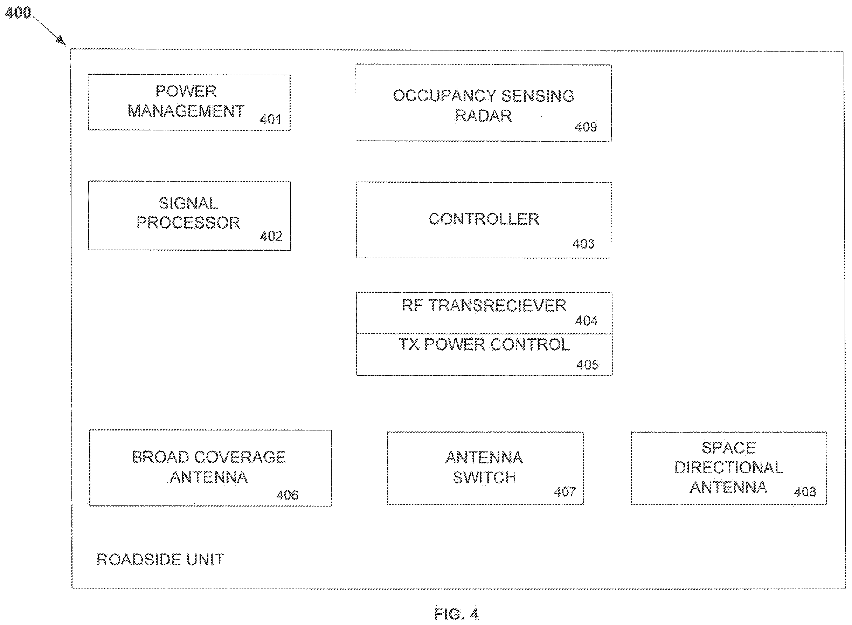

Figure 4 depicts an example schematic block diagram of a roadside unit configuration 400. The power management section 401 may utilize a battery, solar or other suitable power source that may be shared with a parking meter or provided by a utility. The power management section 401 may ensure energy is being utilized optimally, the controller 403 along with the signal processor 402 work together to operate the device and process raw analog data from an occupancy sensing radar 409. In addition the RF transceiver 404 can be frequency and power level controlled internally within its own software. An antenna switch 407 may be used to share antenna elements 406, 408 with the RF transceiver 404.

The communication between the in-vehicle device and the roadside transceiver can be implemented in many ways. Battery optimization on both the in-vehicle device and the roadside device may be a significant consideration in establishing the communication mechanism.

For example, in the simplest form, the communication can be one-way, wherein the in-vehicle device emits a beacon with its unique ID and the roadside transceiver may listen for such beacon, either constantly or periodically and in conjunction with the occupancy state change events.

The communication mechanism also may be two-way and can be initiated either by the in-vehicle device or by the roadside device. The two-way communication can be implemented even if the in-vehicle device is a passive device, such as, for example, a passive RFID tag or other like passive device.

The two-way communication can enable many security schemes, such as challenge-response and other encryption schemes that can be difficult to tamper or copy. In various embodiments, the vehicle identification is used to either grant access for the vehicle or to provide treatment such as parking permits, length of stay or discounted parking, etc., as well as other fraudulent attempts that may be made to utilize these services.

To aid in initial pairing or detection, the in-vehicle device can transmit its identification periodically, as an example, every 1-5 seconds and the roadside device can listen in for 1-5 seconds every 15-30 seconds to ensure a suitable overlap in transmit and receive times. The reverse way, wherein the roadside device transmits periodically its identification periodically for the in-vehicle device to receive also can be implemented.

The in-vehicle device can be used in a system without the occupancy sensor and can be used in conjunction with handheld or vehicle mounted readers.

In various embodiments either device (the in-vehicle device or the roadside device) can initiate the communication, and both can have transmit and receive cycles. A radio-triggered wake-up can be used to wake up the other device (that is not transmitting). A radio signal of suitable strength and a known frequency can be used to wake up the other device. This is useful in managing the battery life of the devices. In various embodiments, the wake-up signal may be the occupancy sensor signal with a special marker. For example, if the occupancy sensor transmits a pulse of a specific duration that is different from its normal sensing duration, the in-vehicle device may be configured to listen to this signal and wake up. With this capability, when a new vehicle arrives and is yet to be identified, the roadside unit can attempt to wake up or synchronize the in-vehicle unit with its special marker.

In various embodiments, the transceiver used for vehicle identification also can be used for wireless communications between the roadside device, including the occupancy sensor, and a backend network for the purposes of communicating with a server either for data repository purposes or for querying the server or database for access granting or preferred treatment purposes. Such wireless communication links can be used to convey health and telemetry of the roadside nodes and for wireless firmware and software updates. In various embodiments, the roadside device also can get health and telemetry information from the in-vehicle device and convey that to the server and also act as a bridge to facilitate software updates for the in-vehicle device. Such software updates also may be used to transmit new security keys or ciphers to the roadside or in-vehicle devices or can be used to shut down an in-vehicle device, for example, where fraudulent use is suspected.

In various embodiments, the roadside device can have one, two, three or more antennas or feed points. These antenna feed points can be within an antenna structure. For example, the antenna structure can have one antenna for a highly directional transmission of a signal towards the zone of interest for vehicle identification purposes, one antenna for a broader spatial coverage transmission for wireless communication to a backend server, and one or more antennas for broad spectrum radar. The roadside device can vary the power levels or frequencies between the two transmissions. An exemplary configuration may use a single industrial, scientific and medical (ISM) band radio transceiver with software controlled power levels and frequency channels and an antenna switching device to switch between the highly directional antenna and the broad direction antenna.

The switched antenna configuration can be used to listen to the signal from the in-vehicle device either in the same transmission burst or in separate bursts and use the measured power levels between the two antennas to determine the probability that the in-vehicle device is located with-in the zone of interest. For example, for a given set of antennas, the difference in the received signal strength between the highly directional (and higher gain) and the broad coverage (and lower gain) maybe the highest if the vehicle is within the high gain direction of the highly directional antenna. The antennas can be shared or be separate from the occupancy sensor radar antenna. A priori knowledge of the antenna gains is usually available and can be used in these calculations.

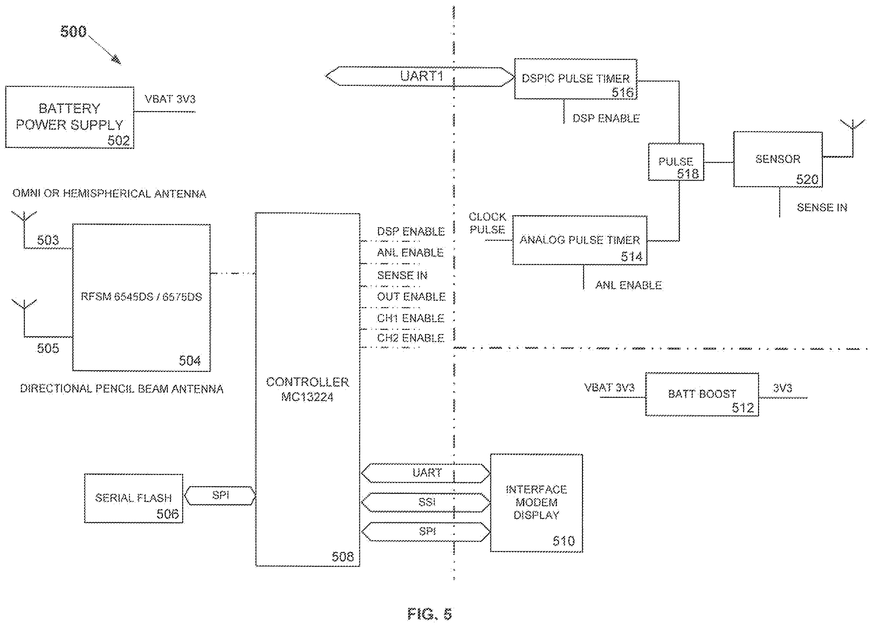

Figure 5 depicts a block diagram of a roadside transceiver 500 with an interface to a broad spectrum radar and switched dual antenna in accordance with an exemplary embodiment. The transceiver 500 may have a battery power supply 502, an antenna and/or front end electronics unit 504 (having both an omni or hemispherical antenna 503 and a directional pencil beam antenna 505), a serial flash memory 506 serving as local persistent storage, a controller or main processor 508, which may have an onboard RF transceiver module, an interface modem display 510, a battery booster 512 (which may augment the battery power supply 502), an analog pulse timer 514, a programmable digital pulse timer or timing generator 516, a pulse generator 518 (that may be triggered and controlled by the analog and/or digital pulse timers 514 and 516), and a sensor 520. The various components may be connected and interfaced, in certain sections, as depicted in Figure 5, through serial parallel interfaces (SPI) or serial synchronous interfaces (SSI). In some connections, a universal asynchronous receiver/transmitter (UART) may be used.

Various types of components may be used. For example, as depicted in Figure 5, the controller 508 may be a MC13224 controller, the digital pulse timer 516 may be a dsPIC digital signal controller, and the antenna 504 may be a RSFM 6545DS or 6575DS. These are meant to be exemplary and non-limiting.

The battery boost source 512 may include a RF energy harvesting circuit or solar cells or an external energy source.

According to an exemplary embodiment, the front end electronics unit 504 may include an antenna, having an external RF amplifier in the transmit path and an low noise front end amplifier in the receive path is shown. The frond end electronics unit 504 also may use a low latency antenna switch to switch between one or more antenna elements 503 and 505 to produce the desired directionality for the intended communications. The antenna switch may be used for antenna diversity reception to overcome unfavorable multipath effects.

In various embodiments, the persistence of the in-vehicle device with respect to the roadside device can be used to differentiate between vehicles in the zone of interest, such as a parked car from other nearby transitory vehicles.

In various embodiments, sensors can use laser, visible, near infra-red (NIR) or infra-red (IR) light emitting diode (LED) or laser diodes, ultrasound, NIR or IR triangulation based sensors with or without a linear photo sensor array, frequency modulated continuous wave (FMCW), Doppler, inductance sensing, imaging, passive acoustic, optical disturbance or other techniques for vehicle detection.

In various embodiments, the unique vehicle identification can be used for automated payment remittance or account charges, or payments to be calculated and charged based on the time the vehicle is parked as calculated after the vehicle departs. To accomplish this, the roadside device may be communicatively coupled to one or more parking payment systems. The communicative coupling may be wireless and/or wired. In various embodiments, a cellular connection may be used. The parking payment systems may have a variety of embodiments and may be co-located with the roadside device or may be remotely located or a combination thereof. For example, the parking payment system may be a parking meter or a parking pay station located at a central location to a number of parking spaces, such as, for example, in a parking garage. Also, based on the vehicle identification and the business and privacy rules set and the type of service, localized information or advertisements can be sent to an in-vehicle device or the user's cell phone or smartphone. This can be used to send reminders or other pertinent messages to the user via their smart phone, cell phone, email, tablet computing device, or other electronic means.

In various embodiments, a collection of roadside devices may listen to the in-vehicle device either in a synchronized manner or not and report their signal strengths to the server and the pattern of received signal strengths can be used alone or in conjunction with other information to further narrow down the location of the in-vehicle device.

In various embodiments, the in-vehicle device or the roadside device may incorporate a fixed delay element with an antenna element tuned to a frequency for the purposes of retransmission of the incoming signal. A synchronization signal such as a sub-microsecond burst from a gateway device that is sufficiently far and at an angle from each of the devices in a way that its signal arrives at the in-vehicle device at near the same time or with a known time lag or lead relative to the roadside device also may be incorporated into the roadside device. The sync signal starts an analog or digital timing circuit in either the roadside or the in-vehicle device and is also reflected from the other device with the fixed delay element after the fixed time delay. The time difference between the sync and the reflected signals can be measured using the analog or digital timing means as a way of determining the distance between the in-vehicle and the roadside device. If more than one roadside device participates in the timing, the information can be uploaded to a server or shared among the roadside device in order to triangulate and further precisely determine the location of the in-vehicle device in relation to the roadside device. This method can determine whether an in-vehicle device is in a near-by parked vehicle or in a further away transit lane. An analog timing circuit, such as a ramp voltage with a 100ns peak-peak duration can be implemented with relative ease and the time gap between the two signals can be easily measured and can be repeated to remove spurious and noise readings. Instead of a fixed delay element, one of the devices also can be designed to transmit a burst after a preset delay. A precision timing circuit, such as those disclosed in the broad spectrum radar timing generator, also can be used for timing or the digital or analog timing circuit o the broad spectrum radar can be used for this timing.

In various embodiments, the in-vehicle and/or the roadside device may use a specially adapted beacon or synchronization burst that is less than a millisecond, sometimes less than 10µs or even less than 1µs, that may be modulated with small amounts of data for synchronization or for broadcasting full or partial vehicle IDs. Such small bursts may be useful in saving battery life and serving as a synchronization reference may be implemented by adapting an ISM band radio transceiver, for example one primarily meant for 802.15.4 communications by hardware and/or software adaptations.

A plurality of antenna elements can be used in the roadside transceiver to narrow down the direction of arrival of the in-vehicle transceiver signals. The directional roadside transceiver antennas may also transmit predominantly in the direction of the zone of interest, reducing the chances that a stray in-vehicle transceiver may pick up its signal and respond back.

In various embodiments, the roadside devices may be synchronized precisely and measure the relative or absolute arrival time of the in-vehicle device signals and determine the location of the in-vehicle device by means of triangulation. The time of arrival of the leading or trailing edge of the next or subsequent in-vehicle beacon can be measured and reported by the roadside devices, or may be measured by two receiving circuits and antennas on the same roadside device. The two receiving circuits can be in the same or in nearby enclosures and are coupled electrically or wirelessly.

In various embodiments, a marker pulse from the broad spectrum radar can be used for wake-up or for location determination purposes.

The communication between the roadside and in-vehicle devices may be standards based or may use a proprietary protocol or another protocol may be used. The protocol may be further customized to keep the beacon burst very short, for example, less than one or a few milliseconds or even less than a microsecond. The beacon burst may or may not contain all the information needed for the identification. A subsequent time interval after the beacon burst may be used the two devices to signal its need to communicate further and establish two way communications to get the identification information or for authentication or security purposes.

In various embodiments, the in-vehicle device may have a broad coverage and/or an omni-directional antenna. Narrow direction antennas may also be used.

In various embodiments, the in-vehicle device may have visual or auditory feedback mechanism to the motorist. For example, if the vehicle's identification was recognized by the roadside sensor, and LED and/or a buzzer may flash. To conserve battery, the LED may be designed to flash say rapidly for an initial time period and then less rapidly as long as the vehicle is within range of the roadside sensor and the LED may be switched off or have a different period at other times.

In various embodiments, the roadside device may signal the in-vehicle device in order to set the LED rate and duration and the period of such flashing.

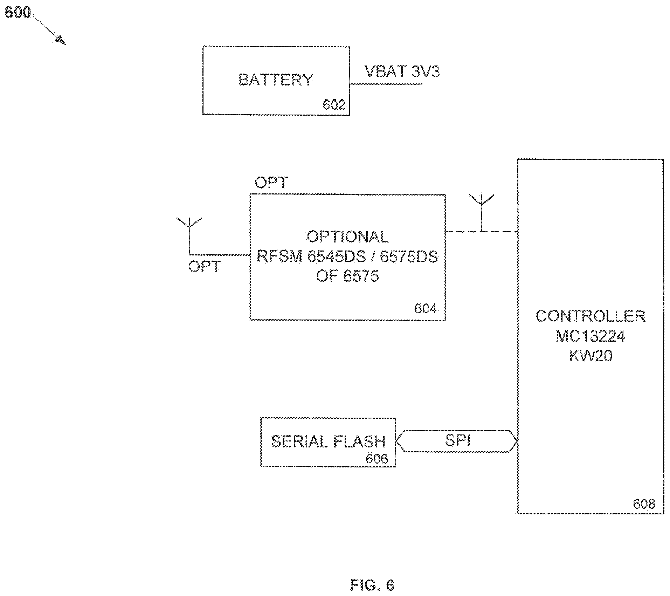

Figure 6 depicts a block diagram of an in-vehicle device 600 in accordance with an exemplary embodiment. The device 600 may have a battery power supply 602, an antenna and front end unit 604 (this may be optional), a serial flash memory 606, and a controller or main processor 608. The various components may be connected and interfaced, in certain sections, as depicted in Figure 6, through serial parallel interfaces (SPI).

The main processor 608 may contain a RF transceiver that may execute program steps for the in-vehicle device 600. In various embodiments, the battery power supply 602 may be augmented by energy harvesting circuits or solar cells. The optional antennas and front end electronics unit 604 may contain a RF switch to switch between multiple antenna elements.

Various types of components may be used in the in-vehicle device 600 for the various functions. For example, as depicted in Figure 6, the controller 608 may be a MC13224 KW20 controller and the antenna 604 may be a RSFM 6545DS or 6575DS or OF6575. These are meant to be exemplary and non-limiting.

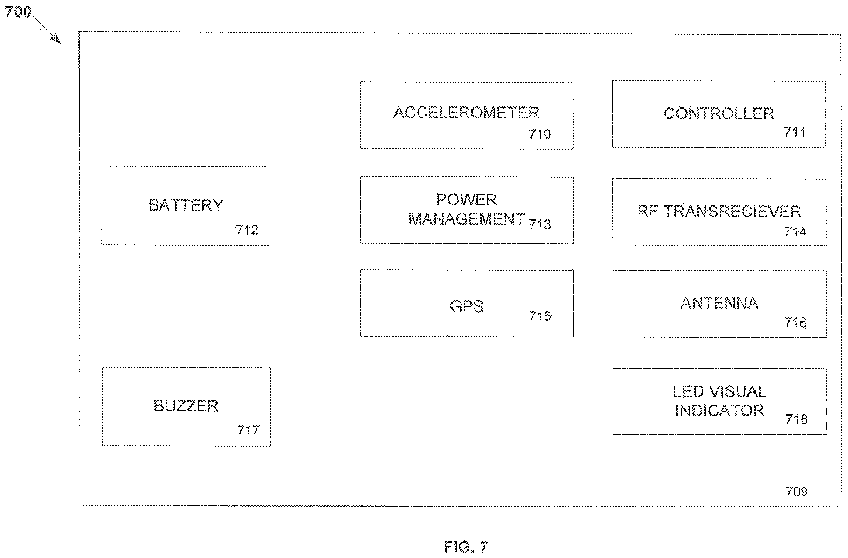

Figure 7 depicts an example schematic block diagram 700 of an in-vehicle unit 709 with accelerometer 710 and GPS capability 715. In this example configuration, a battery 712 may provide power for the entire unit. Controller 711 may execute program instructions and may control RF transceiver 714 which couples with the antenna 716 and a visual indicator 713 and a buzzer 717.

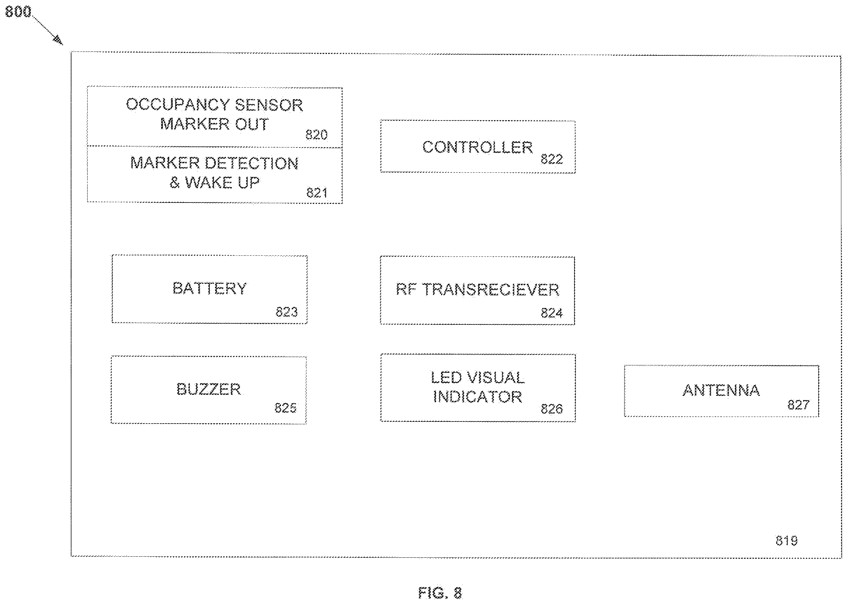

Figure 8 depicts an example schematic block diagram 800 of an in-vehicle unit with marker detection and wake-up capability 821. The marker signal from the occupancy signal is shown in Figure 8 as 820. Controller 822 and antenna 827 may perform a similar function as above, such as in Figures 6 and 7, and visual indicator 826 and buzzer 825 may perform a user interface function of alerting the motorist about whether the in-vehicle device was detected by the roadside unit. Controller 822 executes the program steps necessary and communicates via RF transceiver 824.

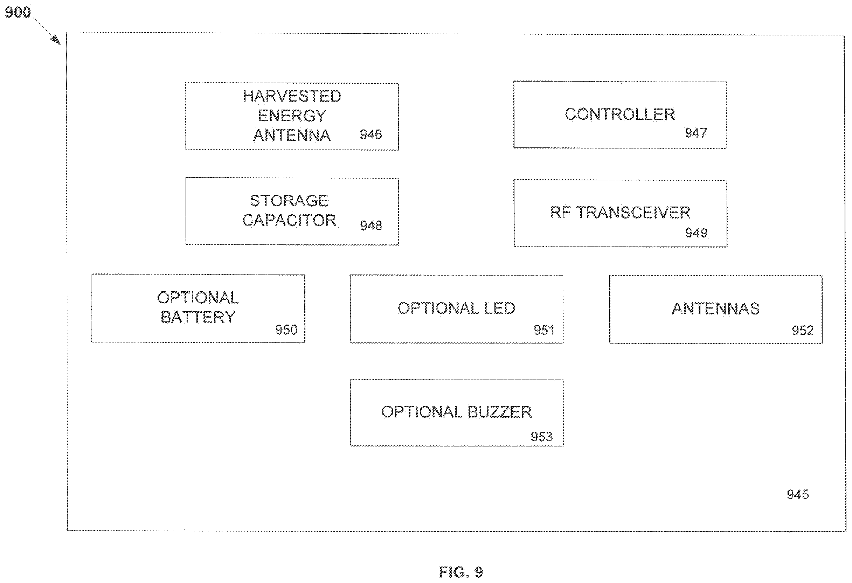

Figure 9 depicts an example schematic block diagram 900 of an in-vehicle device 945 with a harvested energy antenna 946 to fully or partially power the device. Storage capacitor 943 is used to temporarily store the harvested energy. Controller 947 may use RF transceiver 949 coupled with antenna 952 to communicate with the roadside device and control the visual indicator 951 and optional auditory indicator 953. An optional battery 950 can be used where needed to supplement the harvested energy stored in the capacitor 943.

In various embodiments, the vehicle identification may be provided to a parking meter or access control device or similar for applying suitable business rules associated with that vehicle. The vehicle identification also can be provided to handheld or vehicle mounted enforcement or surveillance systems. In some applications, automated camera devices may be used for surveillance or enforcement purposes.

In various embodiments, the time of flight, broad spectrum radars may use different mixing and radar techniques. These techniques may include having transmit (TX) bursts that are phase synchronized to the TX pulses and mixing the reflected RF from a target object with a receive burst RF that is phase locked or phase synchronized with the drive receive (RX) pulses, with the receive burst having the same carrier frequency as the transmit, and generated using the same component(s) as the transmit, and having similar or different in duration than the transmit burst, with the transmit burst being less than 10ns long, such as, for example, about 1-3ns. The receive burst may be swept in time in relation to the transmit burst in order to generate an expanded time replica of the incoming RF. The mixing may use a single stage self-oscillating mixer and the pulse generation may include RC circuits and analog sum circuits or direct digital circuits. Time expansion factors using such expanded time techniques from 100,000 to over 10 million may be used, with 1 million or so in common use. Properties of the radar, including pulse repetition frequency (PRF), duty cycle, transmit pulse width, receive pulse width, sweep rate, range control, timing control, can all be accomplished under software control using micro controllers, digital signal controllers, microprocessors, and similar and use logic gates, radio controlled (RC) circuits, comparators, analog and digital sum circuits for pulse generation and drive generation, including using linearly or exponentially changing signals or signals of other known characteristics. Software control may use one or more digital to analog converters (DACs), pulse width modulation (PWM) outputs or other digital or analog means. The resulting amplitude modulated video signal or its envelope can be digitized using analog to digital converters (ADCs) or comparators or similar circuits. Various short range determination techniques can be used. The signal quality can be measured and optimized by measuring the signatl to noise (S/N) of the resulting video or measuring and adjusting the duty cycle.

The time of flight radars or other roadside sensors can be used with parking meters and parking or traffic management systems for a variety of parking, traffic, and other functions, including as described here.

In order to conserve battery, the parking or traffic management systems can incorporate a sleep cycle and also can synchronize its sleep cycle with the intersection controller timing, such that the system measures and provide the information only when the intersection controller is ready to use that. For example, once the backup at an approach has cleared out, then the sensor can go sleep until the next cycle when the next backup is expected. The sensor can incorporate a dynamic or preprogrammed sleep wake cycle, e.g., 10 or 20ms every 500 ms or any other suitable combination to save on battery.

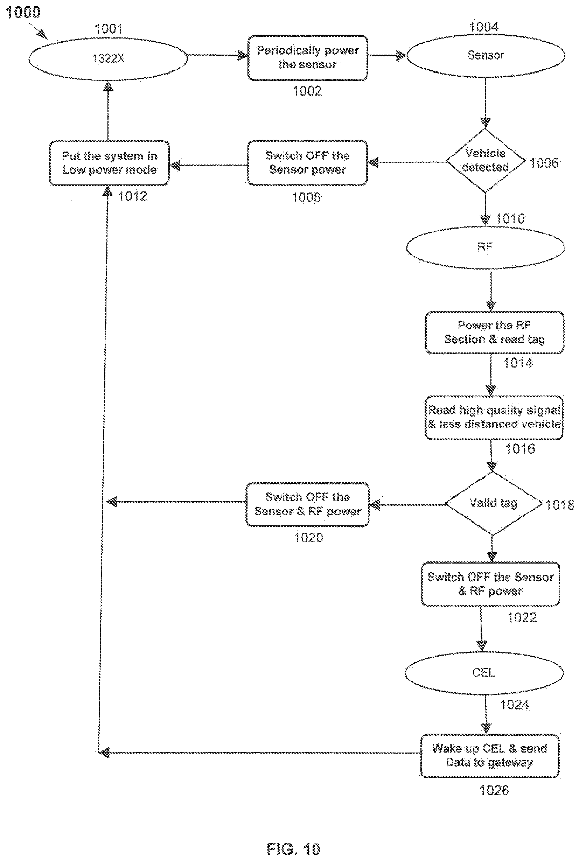

Figure 10 depicts a method 1000 of vehicle sensing or identification with a power conserving cycle in accordance with an exemplary embodiment. The method 1000 shows example program steps that uses vehicle detection (1006) as a source of input data to decide when to power on the RF section 1010 of a sensor to read a tag at 1014. This is because in various embodiments, the tag should not be kept continuously on because of battery or power constraints and thus it requires this method to reduce power consumption. The quality of the tag signal 1016 may be used to determine the likelihood of whether the tag transmission is coming from the intended zone of interest or if the tag signal is an extraneous signal at 1018. Thus, an additional decipherment or determination of the tag signal may be used to decide whether the tag is a valid signal, and once the tag read is completed or the tag read time is completed, the RF section may be powered off in the program steps of 1020 (if not a valid tag or is an extraneous signal) or 1022 (if valid). Block 1024 may be include powering on an RF module, that may be combined or designed as an extension to block 1010, when the roadside unit has enough information to send data to the gateway or a meter as shown in step 1026, and finally the unit is placed back in low power mode at 1012 (following data transmission) waiting at 1001 for a further vehicle sensing event or a periodic timer event to activate the sensor or independently the tag ready cycle.

In various embodiments, the sensors can be used in conjunction with roadways, signalized or non-signalized intersections for the purposes of backup detection, and roadway or intersection management. For example, sensors can be mounted at intersection approaches with one or more sensors located near the approach. Each sensor location can have one more zones with each zone being able to detect vehicle presence or movement using ranging and Doppler methods. For example, there may be 3 sensors mounted at an intersection approach such that the sensors are 40 feet apart with each sensor having 4 zones to detect vehicles with a 20 foot range. In this configuration, it is possible to instrument about 160 feet of each intersection approach covering 2 or even 3 lanes each and be able to detect the presence of vehicles and/or movement at each zone. The ability of the software controlled radars to switch between Doppler and ranging modes very quickly can be useful in this application. The sensors can communicate this information to each other and/or may communicate with an intersection controller that is located near or within a traffic control cabinet and coupled electrically or wirelessly to the sensors. The intersection controller can include a wireless transceiver to communicate with the sensors and/or a wired and wireless transceiver to communicate to the traffic control cabinet and/or other traffic management systems and a cellular or wireless modem to connect to a remote server and can draw power from the cabinet or a nearby power source, including a solar power source. With this configuration, it is possible to know the length of backup at a traffic light at each approach, the duration since the light turns green for vehicles to move at a zone, the occupancy percentage and even the number of vehicles moving over a roadway, and a number of other traffic measurements all of which can be fed to the intersection controller to make decisions about controlling the signal timings and to provide data and alerts to a traffic management system.

Further, a network of such sensors with or without intersection controllers can be used to optimize or improve traffic flow along a section of a roadway or multiple roadways and may constitute a vast improvement over loops, cameras, and other devices used in many intersections currently. This sensor placement and system design also can be used to detect abnormal traffic patterns such as when a disabled vehicle is blocking a lane at an intersection approach or a roadway. This type of system can be useful in developing countries where there is a mix of vehicle types of the roadway and the traffic patterns are not well adhered to. Such a system can take the data from the individual sensors and intersections and use simulations and predictive techniques to determine various timing scenarios and adjust or synchronize the timings of intersection signals. Dynamic message signs and variable speed limit determination and signage also can be driven based on this information.

The sensors can be useful in detecting platoons of vehicles. In various embodiments, the sensors may identify a platoon or group of vehicles (e.g., a convoy or motorcade or other like collection of vehicles travelling as common group in close proximity to one another) by using a collocated transceiver or the sensor transceiver itself to communicate with the platoon of vehicles, or a receiver listening to platoon vehicle signals. The sensors also can detect when the platoon has fully entered or crossed the intersection and communicate this information to the signal controller to ensure that the signal is kept green for the platoon to pass fully or otherwise manage the platoon. One or more of these transceivers can use dedicated short range communications (DSRC) bands and protocols.

In various embodiments, the sensors can be used to provide calibration reference or additional information to autonomous vehicles. Fully or partially autonomously driven vehicles rely on imaging, Lidar, GPS receivers, dead reckoning, and a number of other technologies to help navigate and steer the vehicle. Each of these vehicle mounted technologies provide different types of information and also have failure modes, such as fog of snow in case of Lidar and visual sensors, signal loss and accuracy in case of GPS, etc. A road based sensor may provide a valuable addition to this mix as a fail-safe mechanism, calibration reference, communications, intersection traversal management, or for other purposes.

For example, the sensor can be used to detect and identify an autonomous vehicle, mass transit vehicle or other vehicle requiring special access, such as emergency vehicles, either uniquely or by type of vehicle, and communicate with the sensor using a one way or two way communication or indication that the vehicle requiring special access is approaching an intersection. This detection can trigger a primary or fail safe mechanism in the autonomous vehicle or used to provide an alert to a person in the vehicle. The approaching vehicle information can be provided to the intersection controller and/or two way communications can be facilitated to coordinate the vehicle's traversal with other regular or autonomous or mass transit vehicles according to the business rules of the intersection, including prioritized traversal. For the intersection controller, positively identifying the vehicle at a certain point using the ranging, precise zone, and/or vehicle identification capabilities of the sensor is a huge advantage in ensuring that the intersection controller is communicating with the right vehicle and that reliable and safe traversal can be achieved without undue time gaps and inefficiencies for margins of error and exception conditions. The sensors can be used in addition to other intersection control and coordination technologies.

In various embodiments, in sections of roadways where there is a risk of autonomous or other vehicles incorrectly drifting into an opposing lane, or a wrong lane or going off the road, such as at a steep curve or a road with no median separator, etc., the sensors can be mounted in medians or at the road edge and serve both as a warning and also as a calibration reference. For example, using precise ranging capabilities, the sensors can continuously measure the distance to the approaching vehicle and use that measured distance to modulate its transmissions. A receiver in an autonomous vehicle can pick up these transmissions and determine the separation to the lane edge and the direction of travel as well as a precise location marker to calibrate its location more precisely than using GPS, gyros, dead reckoning, etc. and use data from any and all these sources. If the vehicle is too close to the lane edge or in otherwise an abnormal or a dangerous situation, the sensor can send suitable alert or warning signals for corrective action and/or human intervention. Due to the all-weather and fixed nature of these sensors combined with the low cost and long battery operation, the sensors may be a useful addition to the mix of technologies needed for these applications. The sensors can use secondary transceivers, including DSRC transceivers, for example, with shared or different antennas and other components in these embodiments. These components also can be used to send traffic data, including predictive or modeled traffic data to the autonomous vehicles and/or to the traffic management systems or intersection controllers.

In one exemplary embodiment, the sensors with one or more zones and one or more additional transceivers for communication, with one more shared or separate antennas or antenna elements, can be housed in a road stud with a battery and/or a solar panel. The sensors also can have other surface mount, subterranean, pole mount or similar configurations.

In various embodiments, the vehicle detection and vehicle identification techniques described herein can be used to detect when a mass transit vehicle (e.g., a bus or streetcar) is approaching an intersection, roadway point, or access point and provide the mass transit vehicle prioritized access. As the mass transit vehicle is approaching, the sensors can detect the amount of backup at the intersection approach and the intersection controller can change the signals to clear the backup in time for the mass transit vehicle to approach. In addition, knowing precisely the location of the mass transit vehicle at specific spots as mass transit vehicle approaches the intersection can help control the intersection timing much more narrowly and reduce the allowance needed for margins of error. The length of backup, the number of vehicles traversing the intersection ahead of the mass transit vehicle, time required to clear, etc., can be utilized by the traffic management system and network to adjust signal timing at subsequent intersections or in the grid in general.

In these configurations, the sensor system also may warn autonomous and other vehicles of work zones and other temporary road conditions. A sensor sending a warning signal and any associated data can be placed or installed in a portable enclosure near these locations.

The features described above can make a difference in urban and suburban planning and traffic management. For example, creating dedicate bus lanes for a rapid transit system can be expensive and inefficient. A system where buses can share the lanes with other vehicles or a selected set of vehicles (such as high occupancy vehicles (HOV)) and provide intelligent and prioritized traversal for the buses without unduly sacrificing intersection efficiency can keep all or almost all the benefits of the dedicated bus lanes, while allowing for efficient sharing and use at the same time and makes such a system economically viable.

In various embodiments, in a larger system, the roadside broad spectrum radar sensors with or without vehicle identification devices can be used in conjunction with on-street parking guidance devices. These guidance devices may provide substantial parking and congestion mitigation benefits and help make cities greener and smarter.

In various embodiments, the sensor can be used to detect trains, vehicles, and /or people at unmanned or automated rail crossings and provide warnings or alerts, especially if a dangerous condition is detected. Battery powered ranging sensors can be located for example, around a half or one kilometer from a crossing and an alert sounded at the crossing. Other sensors at the actual crossing can detect whether an object such as a person or vehicle is in the crossing. An alert can be sounded when a train in approaching and the same or different alert for the same or different duration can be sounded at the crossing when there is also an object present. As an example, one or two sensors can be used for each train approach. Since trains can arrive in either direction on some tracks, both sides of the crossing for each track can be instrumented. The sensors can communicate to the siren device, which can be collocated with a gateway, through 802.15.4 or similar ISM band, dedicated short range communications (DSRC), or similar transceiver.

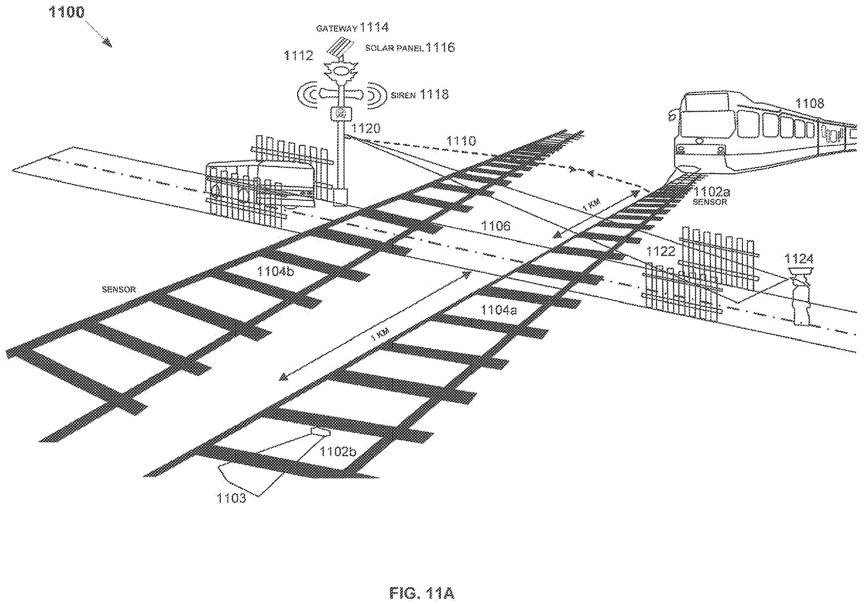

Figure 11A depicts an unmanned railroad crossing 1100 in accordance with an exemplary embodiment. The unmanned crossing 1100 may be configured as depicted in Figure 11A. It should be appreciated that the configuration depicted is meant to be exemplary and non-limiting. For example, the distances depicted are exemplary as is the configuration of the sensor at the crossing. Also, while a crossing having two sets of railroad tracks is depicted, the unmanned crossing 1100 may be used with a single railroad crossing or at a crossing have more than two sets of railroad tracks or at other types of crossings, such as highway crossings or bike lanes. Exemplary embodiments may have a plurality of sensors with a defined zone of interest. One or more sensors may be located a known distance apart upstream of each approach on each track at the rail intersection. The timing of the sensing events at the sensor sensors for a given approach may be used to calculate the speed of an approaching train or used for back end verification purposes.

Sensors 1102a and 1102b may be positioned in a set of tracks 1104a that cross a road 1106. Each sensor (e.g., 1102a) may be a set of sensors located a known distance apart; using this distance and the timing of detection between each sensor of the set may be used to calculate the speed of the approaching train. Each of the sensors may have a set detection envelope or defined zone of interest 1103. The sensors 1102a and 1102b may be positioned at a distance from the road 1106. For example, as depicted in Figure 11A, the sensors may be located 1km from the road 1106. Additionally, the second set of tracks 1104b may have a set of sensors 1102a and 1102b (not shown) positioned in a similar manner to those on tracks 1104. The sensors 1102a and 1102b may be positioned to detect a train 1108 coming from either direction. The sensors 1102a and 1102b may be a time of flight radar sensor, FMCW radar sensor, or a Doppler radar sensor. The sensors also may include an optical and/or infrared sensor. The sensor may be a combination of sensor types.

Once a train 1108 enters the detection envelope 1103, then the sensor, such as sensor 1102a, as depicted, may send a signal 1110 to a pole mounted warning system 1112. The signal 1110 may be a wireless signal. In various embodiments, the signal 1110 may be wired signal (each sensor may be physically connected to the system 1112). Both a wired and wireless signal also may be used in combination for redundancy. The system 1112 may have a gateway 1114 to receive the signal 1110, a solar panel 1116 to provide power, and a siren 1118 to provide an audible and/or visual warning. It should be appreciated that other types of warning systems are possible. The siren 1118 may have a directional audio/visual warning that is directed to one side of the crossing based on detection of an object therein as described below. The solar panel 1116 may include a battery or other energy storage system to store energy for periods when the sun is not available, such as at night or during cloudy periods.

In various embodiments, the system 1112 may have a sensor 1120 which has a detection envelope 1122 to sense when a person and/or vehicle and/or object is present near the crossing or is approaching the crossing. The sensor 1120 may be a time of flight radar sensor, FMCW radar sensor, a Doppler radar sensor, an optical sensor, or an infrared sensor. The sensor may be a combination of sensor types. The detection envelope 1122 may be configured to detect objects within a set area a certain distance from each of the tracks 1104a and 1104b. Only one detection envelope 1122 is depicted, but it should be appreciated that the sensor 1120 may have a second such envelope for objects approaching from the opposite direction on road 1106. For example, person 1124 may be approaching the crossing on the road 1106. The sensor 1120 may detect this person 1124. The detection of such a presence may be used to determine if the siren 1118 is actuated based on the approaching train 1108. In other words, if no vehicle or person is present at or approaching the crossing, then the siren 1118 may not be sounded. This may result in power saving as well as reducing noise and/or light pollution. For example, the crossing may be located in a residential area such that lights and/or noises from the siren 1118 may be disruptive. In various embodiments, the system 1112 may lack the sensor 1120 such that the siren 1112 is actuated any time a train approaches the crossing. The siren 1112 also may have a different audible and/or visual pattern based on the detection of an object in the crossing.

In various embodiments, the sensors 1102a and 1102b may have a transceiver collocated therewith for train carriage verification. The transceiver may be a RF or other type of wireless transceiver. This may enable at least one of the train carriages to be uniquely identified such that the train configuration can be monitored. This carriage identification information may be reported using the system 1100 or reporting using a separate system that may be installed to receive this type of information and subsequently relay this information to a backend computer system.

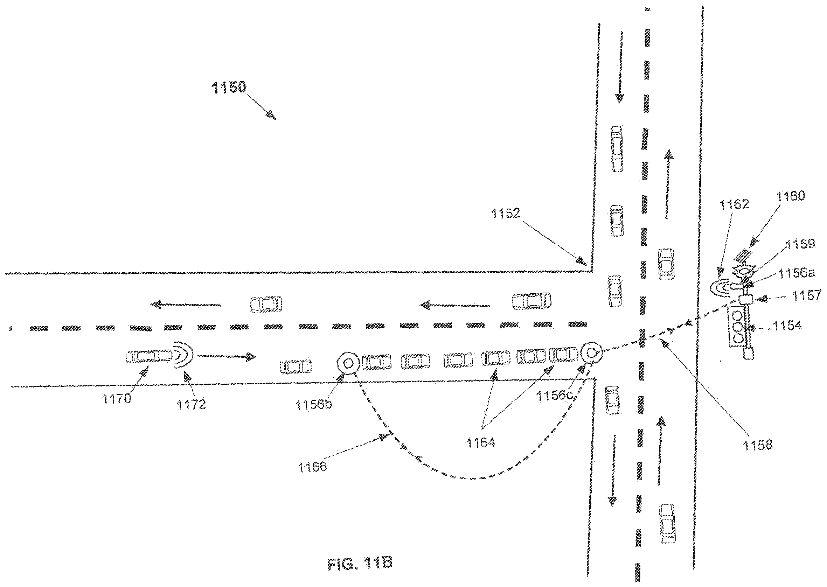

Figure 11B depicts an intersection management system 1150 in accordance with an exemplary embodiment. It should be appreciated that the configuration depicted is meant to be exemplary and non-limiting. The system 1150 may be located at an intersection 1152. A traffic signal 1154 may be located at the intersection. It should be appreciated that while a single traffic signal 1154 is depicted, there may be additional traffic signals as is standard practice with intersections. A sensor 1156a may be located at the intersection. The sensor 1156a may be pole mounted. The sensor may be collocated with the traffic signal. Included on the pole mounting may be an intersection controller 1157. In various embodiments, the intersection controller 1157 may be located in a different location from the sensor 1156a. Sensors 1156b and 1156c also may be located in or on the road. For example, the sensors may be located in a subterranean configuration. It should be appreciated that while two road sensors 1156b and 1156c (one located upstream (1156b) and one located downstream (1156c) of the intersection) are depicted, there may be more than two such sensors located in the road in series at various upstream and downstream points in the queue area. Furthermore, the location of the sensors 1156b and 1156c depicted is meant to be exemplary, as a variety of locations and combinations of sensors are possible. The sensors 1156b and 1156c may be linked together. In various embodiments, both a pole-mounted and subterranean configuration may be used as depicted in Figure 11B. The sensor 1156c may be communicatively coupled (1158) with the traffic signal 1157. Likewise, the sensor 1156b may be communicatively coupled with the intersection controller 1157. This coupling may be a wireless or wired coupling. The sensor 1156a (and, in various embodiments, the traffic signal 1154) may be use solar power 1160. The sensors 1156b and 1156c may be battery powered. The sensor 1156a may have a radiation pattern 1162 that may be directed towards the intersection 1152.

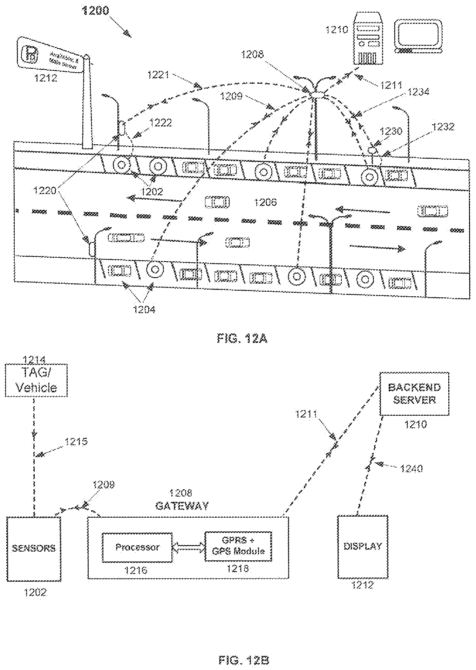

As described above, the system 1150 may be used to detect vehicles, such as vehicles 1164, at an intersection and manage the intersection. According to exemplary embodiments, the sensor 1156a and/or 1156b and/or 1156c may be a time of flight or FMCW radar sensor. The sensor 1156b may be positioned upstream of the intersection approaches near locations where vehicle queues can form to detect the length of queues and clearance time. For example, a queue to turn right is depicted in Figure 11B. As described above, these radar sensors may be wired or wirelessly coupled with the intersection controller 1157. In various embodiments, a gateway (not shown) may be used as an intermediate connection point between the sensor and the controller (a gateway configuration is depicted in Figure 12A, described below). In such a configuration, for example, the intersection controller 1157 may be remotely located. The gateway may be located in the position occupied by the intersection controller 1157 in Figure 11B. Other locations and configurations are possible.

The sensor(s) (1156a and/or 1156b and/or 1156c) may report a status of queues including vehicle count, vehicle type, and vehicle classification data. This data may be obtained from vehicle tags or from sensing of the vehicles themselves. In various embodiments, the radar sensor may include an imaging device 1159 to obtain images of the vehicles to provide such data as well as provide queue information. For example, the imaging device 1159 may be collocated with the sensor 1156a as depicted in Figure 11B. In various embodiments, the sensor 1156a may be itself be an imaging device in place of a radar sensor. Using the information from the various sensors, the intersection controller can control the status of the traffic signal 1154 at the intersection and sequence the signals using the information provided by the sensor to optimally route traffic through the intersection. For example, given the situation depicted in Figure 11B, the intersection controller may stop traffic in the cross direction (e.g., coming from the top of the figure) to allow the queue of vehicles to move into the intersection and clear out. The downstream sensor 1156c may be used to calculate queue clearance time and clearance distances since the downstream sensor 1156c may be able to determine when no further vehicles are sensed. The sensors 1156b and 1156c may be communicatively coupled (1166). For example, the sensor 1156b may exchange data on sensed vehicles to 1156c such that 1156c may know how many vehicles should be sensed.

In various embodiments, the intersection controller may be interfaced with external systems to receive information regarding approaching vehicles to the intersection that have priority, such as, for example, transit or emergency vehicles 1170. The vehicle 1170 may be a platoon of vehicles (such as, for example, a motorcade or convoy). This information may be received from transit control authorities or emergency services. In various embodiments, the vehicle 1170 may have an identification system 1172 that may broadcast its position and this may be received by the intersection controller 1157. This system 1172 may use a cellular data path, for example, to broadcast its position. GPS data may be included in the position broadcast. Other wireless paths also may be used for the data. Upon receipt of information regarding a priority vehicle, the intersection controller may calculate the pending queues and clearance times and may attempt to clear the queues ahead of the vehicle 1170's approach to ensure that the transit of the vehicle is minimally impacted.

In various embodiments, the system 1150 may be combined with the system 1100.

In various embodiments, the radar sensors, whether pole mounted, curb mounted, or subterranean mounted, may communicate information through a gateway and/or a cellular network and/or other wireless network to a server using a wireless communication capability. In various embodiments, where possible, a wired connection may be used in lieu of or in addition to the wireless communication path. A collection of on-street guidance devices can be networked in a way that the collection of on-street guidance devices can receive information directly from the on-street sensors or from the server regarding number of vacant spots in a given road segment or block face. A sensor also can be mounted in a raised parking meter dome, particularly at a location above the single space meter so that the sensor has a clear and unobstructed view of the parking space in question. The gateways and/or sensors can contain blacklists for ineligible in-vehicle devices and may use that to disable that device. This capability also can be used for stolen vehicle detection and police can be alerted upon such detection.

Figure 12A depicts an on-street parking system 1200 in accordance with an exemplary embodiment including wireless curb mounted sensors, gateways, guidance displays, wireless communications, and a backend computer. The system 1200 may have a series of sensors 1202. Each sensor 1202 may be located in or adjacent to a respective parking spot 1204 along a road 1206. The sensors 1202 may be located such that each has a zone of interest corresponding to the respective adjacent parking space (e.g., 1204) that is along a road (e.g., 1206). It should be appreciated that only a portion of the sensors and parking spots are labeling in Figure 12A. Each sensor may be configured to sense the presence of a vehicle in the respective parking spot 1204. In various embodiments, the sensor may sense a tag associated with the vehicle. Both tags and vehicles also may be sensed. The sensors may be located on or near a curb face or on the curb or the sidewalk. It should be appreciated that a variety of such locations are possible consistent with the embodiments disclosed herein.

Each sensor 1202 may be communicatively coupled to a gateway 1208. The coupling 1209 may be two way and may be wireless. The gateway 1208 may be communicatively coupled to a server 1210. The coupling 1211 may be two way and may be wireless. In various embodiments, the wireless coupling may be over a cellular network or ISM. The coupling 1209 and 1211 may both be cellular. In certain embodiments, the coupling 1211 may be cellular and the coupling 1209 may be another type of wireless signal, such as 802.1. Sensors located closer from the gateway 1208 may serve as relay points for sensors located further from the gateway. Repeaters also may be used to receive and retransmit or repeat the signal for sensors located further away from the gateway. Aset of wired connections also may be used for the transmission of data. The gateway 1208 may be capable of sending data to each of the sensors. For example, the gateway 1208 may be able to interrogate the status of an individual sensor and/or send instructions to the sensor, such as to power down. Likewise, the server 1210 may send data and instructions to the gateway. The gateway may relay such data and instructions, as appropriate, the sensors.

Each sensor 1202 may be communicatively coupled (i.e., either wirelessly or wired) at 1232 with a roadside payment mechanism, such as parking meter 1230. It should be appreciated that each parking space 1204 may have a parking meter associated therewith and only one is shown for illustrative purposes. In various embodiments, a parking meter may serve multiple spaces and may be communicatively coupled with the respective sensor(s) for each parking space the sensor serves. A common parking meter or roadside payment mechanism also may serve the entire set of spaces. It should further be appreciated that the term parking meter is meant to be non-limiting and inclusive of different roadside payment mechanisms, such as payment stations. The parking meter 1230 may be communicatively coupled with the gateway 1208 (as depicted at 1234). In various embodiments, the parking meter 1230 may use the links 1209 for this connection (sending and receiving data through the sensor). Through the gateway, the parking meter may then communicatively couple with the server 1210.

It should be appreciated that the gateway may be replaced by or used in addition to a cellular tower or a parking meter. For example, the parking meter 1230 may incorporate the gateway or may serve as the gateway. A combination of these may be used. It should also be appreciated that even though a single gateway 1208 is depicted, there may be more than one gateway (or cellular tower or parking meter). In various embodiments, cellular tower(s) may be used as a relay point for the data transmission from the sensors.

A display 1212 may indicate the number of available parking spaces. The display 1212 may indicate real-time information. It should be appreciated that the display 1212 may be located on both sides of the road 1206 and display the available parking spaces for a particular side. In various embodiments, such as depicted in Figure 12A, the display 1212 may display the total number of available spaces for the road 1206. The display 1212 may provide the direction of the available parking spaces as described herein. The display may be configured consistent with the embodiments described herein. For example, the display 1212 can show the number of open spaces and have a separate indication when no spaces are open and when data in not available. The display 1212 can use, for example, a single 7 segment display for each direction of travel using either electromagnetic flip segments (which do not consume any power for the segments unless there is a state change) with highly reflective and visible coatings or can use LED or other suitable electronic-ink or bi-stable liquid crystal displays (LCD) displays. The advantage of using a low power display such as flip dot, flip segment, electronic-ink, bi-stable LCD, etc., is that the display mechanism can be solar or battery powered, which may be a benefit for cities where access to continuous power in light poles is cumbersome or expensive or collocating the display units with power source involves tradeoffs.

Figure 12B depicts a block diagram of communication between devices in the parking system 1200 in accordance with an exemplary embodiment including in-vehicle devices or tags, sensors, gateway, guidance displays, and a backend computer. A tag (or other in-vehicle device) 1214 and/or vehicle 1214 may be sensed by a sensor 1202 at 1215. The sensor may communicate with the gateway 1208. The gateway may have a processor 1216 and a GPRS/GPS module 1218. The gateway may communicate with the server 1210. The gateway may communicate (1240) with the display 1212. The communication 1240 with the display may be wired or wireless and may be two-way communication. In various embodiments, the server 1210 may communicate with the display in addition to or in lieu of the gateway communicating with the display.

The various wireless communications may be routed through an intermediate point, such as a relay or router, in various embodiments.

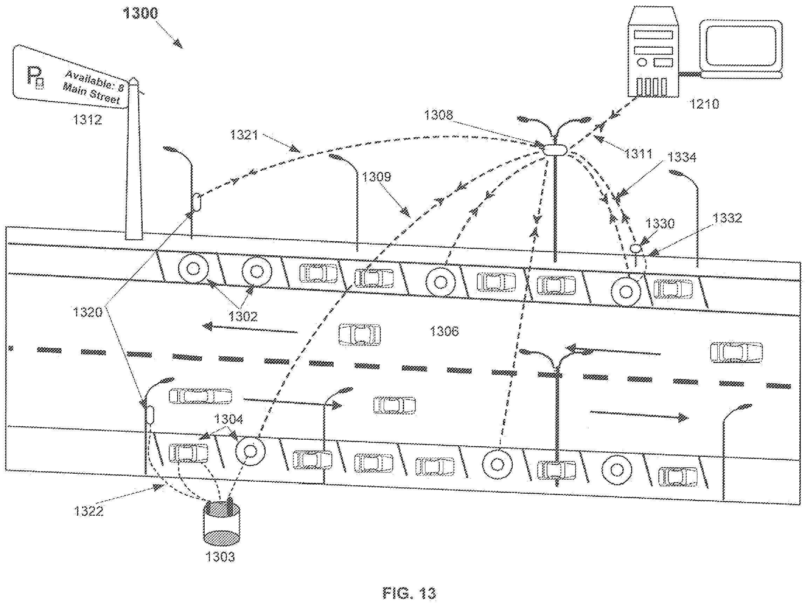

Figure 13 depicts a schematic representation of a subterranean parking occupancy system 1300 communicating with in-vehicle devices and wireless gateways in accordance with an exemplary embodiment. The system 1300 may be similar to the system 1200 depicted in Figure 12A, and similar reference numbers refer to similar components. The communications between the various components may occur as depicted in Figure 12B. The system 1300 may differ from the system 1200 in that the sensors may be located below ground, e.g., subterranean sensors. For example, the sensors 1302 may be located under the ground beneath each parking space 1304 or in the curb or sidewalk adjacent the parking space 1304. An exemplary sensor 1303 is depicted. In various embodiments, a sensor may service two parking spaces.

Each subterranean sensor 1302 may have a zone of interest that corresponds to a parking space (e.g., 1304) that is next to a road (e.g., 1306). Each subterranean sensor may have a plurality of antennas for communicating with the in-vehicle tags, as well as with the gateway 1308 (which may be similar to that depicted in Figure 12B). The system 1300 may include parking payment mechanisms such as parking meters 1330, which may interface and function as described above in Figure 12A.

It should be appreciated that the gateway may be replaced by or used in addition to a cellular tower or a parking meter. A combination of these may be used. It should also be appreciated that even though a single gateway 1308 is depicted, there may be more than one gateway (or cellular tower or parking meter). For example, the parking meter 1330 may incorporate the gateway or may serve as the gateway.

It should further be appreciated that the systems 1200 and 1300 may be combined with other systems and features described herein such as the surveillance and photo enforcement systems.

Additionally, as described herein, an imaging system may be combined with the parking systems 1200 and 1300 to provide imaging capability to facilitate parking enforcement operations. For example, one or more imaging devices 1220 may be installed at various locations near the parking spaces such that each parking space may have coverage from at least one imaging device. The imaging devices 1220 depicted in Figures 12A and 13 (labeled as 1320) are exemplary. The imaging device 1220 is depicted as a pole-mounted device, however other mounting configurations are possible such as curb-mounted and portable, movable mounting. The imaging device 1220 may be portable and as such may be temporary in positioning. In various embodiments, each parking space may have an imaging device. The imaging device may be communicatively coupled (1222 or 1322) to each sensor 1202 (located in a parking space to which the imaging device provides imaging coverage) to enable imaging coordination between the sensor and the imaging device such that images are taken at the appropriate time. This may be a two-way coupling. In various embodiments, the imaging device may continuously take images or may take images at pre-set time intervals. The imaging device may be communicatively coupled to the gateway and to the server using two-way wired and/or wireless communications paths 1221 (or 1321).

For example, the display 1312 can show the number of open spaces and have a separate indication when no spaces are open and when data in not available. The display 1312 can use, for example, a single 7 segment display for each direction of travel using either electromagnetic flip segments (which do not consume any power for the segments unless there is a state change) with highly reflective and visible coatings or can use LED or other suitable electronic-ink or bi-stable liquid crystal displays (LCD) displays. The advantage of using a low power display such as flip dot, flip segment, electronic-ink, bi-stable LCD, etc., is that the display mechanism can be solar or battery powered, which may be a benefit for cities where access to continuous power in light poles is cumbersome or expensive or collocating the display units with power source involves tradeoffs.

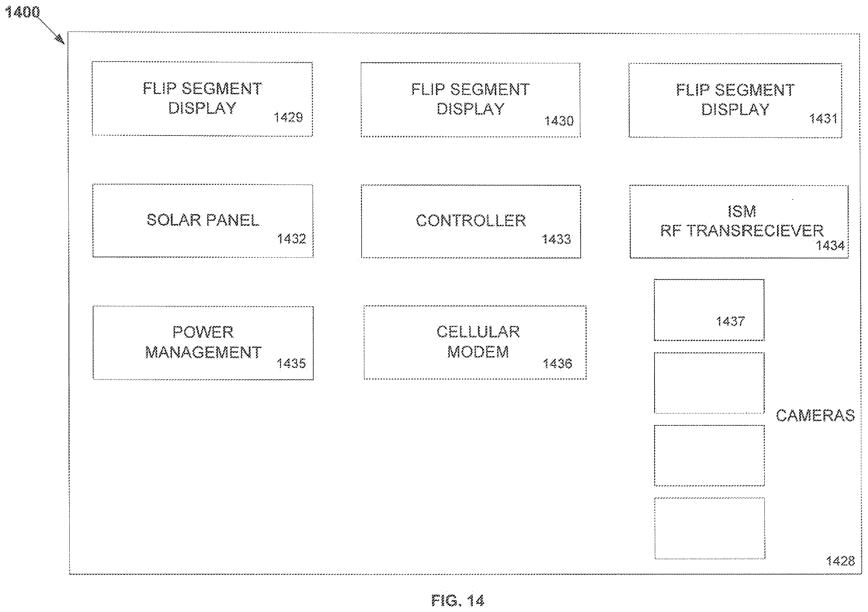

Figure 14 depicts an example schematic block diagram 1400 of a collocated roadside unit 1428. Display units 1429, 1430, and 1431 may be used to indicate the space availability, for example, in 3 directions of travel for a given intersection approach. Each display may have a 7 segment display for digits and/or alphanumeric characters. Solar panel 1432 may provide power to the unit combined with batteries for storage and power management unit 1435 controls power to various subsystems. Controller 1433 may use an ISM transceiver 1434 and cellular modem 1436 to communicate with roadside devices and backend servers respectively. The controller 1433 may include one or more processors that may be execute the program steps that operate the unit 1428 and may be communicatively coupled with the other modules as depicted. The cellular module 1436 may be used for backhaul communications and the ISM transceiver 1434 may be used for links to roadside units and sensors. In addition, one or more imaging cameras 1437 may be interfaced with the controller 1433 to enable periodic image evidence to be collected and stored either locally or on the server.

Conveying the parking availability information to motorists can be difficult, given the number of information points. For example, for a given typical roadway approach, the motorist can have a choice of turning left or right or going straight. While the motorist is may be interested in and may make turning decisions based on whether there is sufficient likelihood of having space available, there is usually limited value in knowing how many total spaces, say beyond 9 spaces, are available. For example, if there is 0 or 1 space vacant, one may make a determination that it is unlikely to find a space as someone else may occupy that space by the time the motorist gets there. The situation is different if, for example, there are 5 or 8 spaces available and there is a very high likelihood of space being available for the motorist. But there is little value in knowing that there are more than 9 spaces open in a typical on-street parking situation.

To optimize the tradeoffs between conveying too much or too little information, and the size and power requirements, exemplary embodiments may use single digit displays for each direction. However, multi-digit displays are envisioned. The displays may be collocated in the same enclosure and may share the same power and communication mechanism. The display enclosures and control electronics also can serve as gateways for the on-street sensors, but not all display units need to be gateways. The displays can have either ISM band communications or both ISM band and cellular communications in cases where displays are configured as gateways.

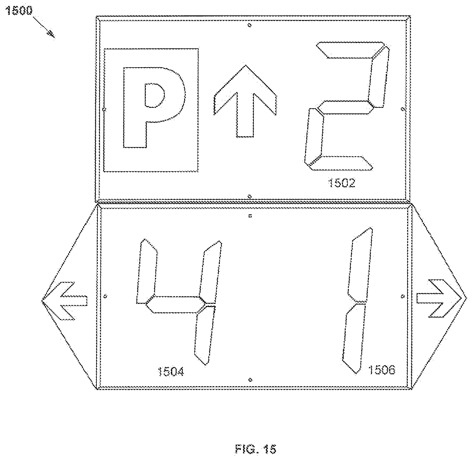

Figure 15 depicts a pole-mounted guidance display 1500 in accordance with an exemplary embodiment. The pole-mounted guidance display 1500 may indicate the number of spaces available in different directions. For example, the display 1500 as depicted in Figure 15 may indicate that 2 spaces are available straight ahead at 1502, 4 spaces are available to the left at 1504, and 1 space is available to the right at 1506. It should be appreciated that this is example is exemplary and non-limiting.

The guidance can be provided at a point ahead of the intersection to enable motorists make lane change decisions safely and in time. In various embodiments, a multi-direction guidance display is located upstream of each approach that shows open spaces for each possible direction of travel.

The data from the occupancy sensors sent to servers also can be fed to smartphones, GPS units, in-vehicle navigation displays and the like. The on-street guidance display can be used by itself or in conjunction with the in-car or portable devices.

In many applications, there may be sufficient street lighting to keep the flip segment or flip dot or electronic ink or similar non-self-lit displays adequately visible in low light and night conditions. If the guidance displays lose communications with the sensors or the server for any reason, all the segments can be turned off, thus differentiating this condition from when communications are available and no spaces are available.

In some applications, a single direction guidance display can be utilized. Similar embodiments are also applicable for parking lots and garages and displays, in multi-digit configurations that can be mounted at the entrance of each aisle or floor or section of the parking lot or garage.

Alpha numeric LED display, alternating displays that show the occupancy in different road directions in a time sequence, providing additional digits, etc., are also envisioned.

In various embodiments, the guidance display is integrated with a static parking sign in typical parking colors and fonts, such as, for example, blue, white, red, etc.

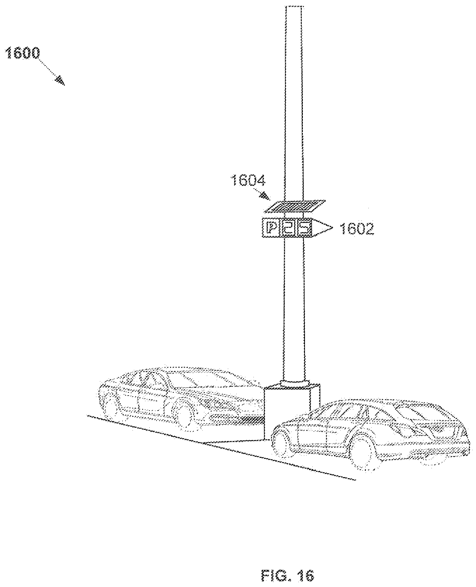

Figure 16 depicts a multi-digit guidance display 1600 in a parking lot in accordance with an exemplary embodiment. The display 1600, for example, may be used in a surface parking lot or similar structure. The display 1600 may indicate the availability of spaces in a particular direction. For example, the display 1600 as depicted in Figure 16 may indicate at 1602 that 25 spaces are available to the right. The display 1600 may be solar powered (1604). It should be appreciated that this is example is exemplary and non-limiting. The display 1600 may be located at the start of a parking row and hence the direction of the spaces the display 1600 indicates may be fixed to the right as depicted. A similar display, pointing in the opposite direction, may be located at the other end of the parking row, for example. In various embodiments, the display 1600 may be used in a parking garage or similar structure. The display 1600 also can be adapted to display the number of spaces on a particular floor or area of the parking lot or garage. This may be a summary type display that may be located proximate to each entry point to the parking area to provide motorists with parking information upon entry to the parking area.

The solar panel for the display units can be integrated in the same enclosure or be separate for optimal orientation adjustment and be electrically coupled. The display units and solar panel assemblies are design for adequate mechanical strength in high wind conditions and designed to meet transportation department and city specifications for such equipment.

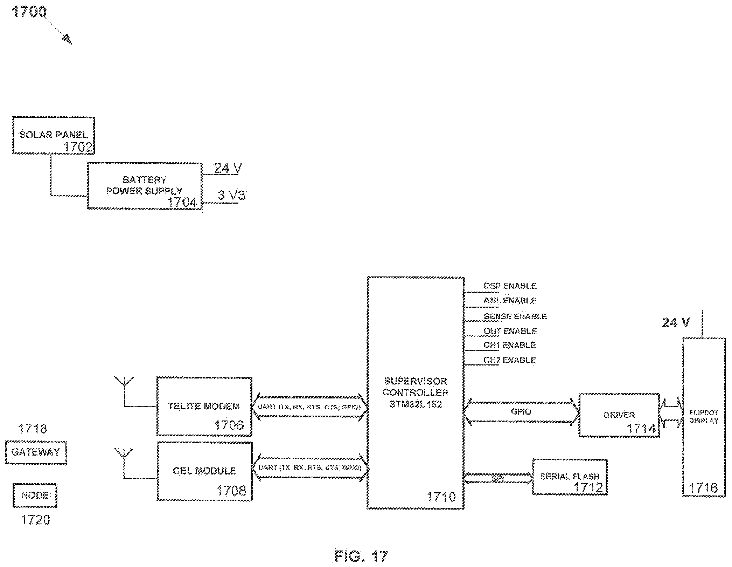

Figure 17 depicts a block diagram of a gateway 1700 with an integrated guidance display in accordance with an exemplary embodiment. The gateway 1700 may be solar powered and may have a solar panel 1702 connected to a battery power supply 1704. The gateway may have a telite modem 1706, a cell module 1708, a supervisor controller 1710, a serial flash memory 1712, a driver 1714, and a display 1716. The battery power supply 1704 may power the controller and/or other devices, as well as the display 1716, as depicted. The display may be a flipdot display. In various embodiments, the display may be a LED display or other type of display.

The controller 1710 may use a processor for executing program steps and may be coupled with a cellular radio 1706 for backhaul communications and an RF transceiver 1708 for communicating with the roadside units and sensors. The processor also may be coupled with the driver 1714 to control the state of the display units 1716 and have the persistent storage 1712. The unit may be augmented with solar power from the panel 1702 and be powered by a battery and power supply 1704. An additional gateway 1718 and a roadside node 1720 are shown for illustration purposes only. It should be appreciated that there may be more than one additional gateway and node.

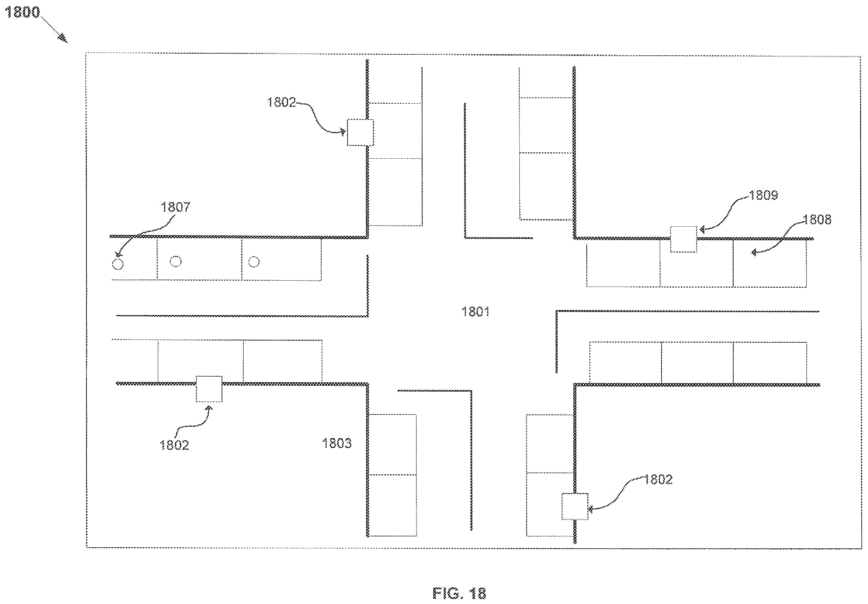

Figure 18 depicts an example placement 1800 of guidance displays collocated with respective gateways and cameras 1802 at each approach to an intersection 1801, so that motorists seeking an open parking space can make informed decisions. Subterranean sensor mounting locations 1807 are shown along with on-street spaces 1808 and curb 1809.

The system may include one or more imaging components that may be coupled with the guidance display for secondary evidence related to revenue collections and enforcement. These imagers may be directed towards nearby parking spaces to ensure that a given space is covered by at least one imager. The imagers are taking an image snapshot, for example, every 30 seconds, and compressing each image snapshot and either storing locally and/or sending to a central server. For example, in a metered payment application, for the meters may zero-out time on the meter when a vehicle pulls out or when a new vehicle arrives at the space. While highly accurate sensors, such as those disclosed by the present inventor may prevent false zero-outs, it is often necessary to have secondary evidence if there are errors or disputes. If there is a motorist dispute about a zero-out or a ticket generated due to a zero-out, the images around the time in question can be pulled up by the concerned authority and reviewed for validity. A random check of the images may also work to verify the accuracy and performance of the sensors. The imager also may be triggered when there is vehicle occupancy change detected. An imager can be mounted to see 10-20 or more spaces and may be collocated with the gateway. Exemplary embodiments may include colocation of gateway, guidance display and one or more imagers to cover all the surrounding spaces. The collocated devices can share power, battery, processor, and communication components. Local storage of the images may reduce communication and long term storage costs, helps mitigate privacy concerns, and can be designed to provide only those images that are necessary for adjudication or secondary review purposes.

Current surveillance and photo enforcement systems are greatly limited in their usefulness due to significant power consumption, which ties such systems to fixed infrastructure such as dedicated or street poles or large battery operated devices, which, though portable are very difficult to use, transport, and operate. A reason for photo enforcement is to modify motorist behavior and reduce accident rates. But having cameras in fixed locations, where motorists can get used to the cameras or the cameras are so bulky the camera is then highly visible and transported less, often negates these motorist behavior modification benefits and the cameras end up getting placed at locations that are most suitable for fixed infrastructure rather than for traffic engineering needs (such as accident prone locations, need to constantly measure motorist behavior at certain locations and shift locations).

A similar issue exists in the field of security surveillance cameras, especially those operated by police and city safety agencies. In many applications, security agencies can place cameras quickly based on surveillance needs and evolving threat scenarios and move them around frequently as needed.

Exemplary embodiments include a low power, road side portable surveillance device that uses a low power radar or optical disturbance sensor to detect vehicle presence in a zone of interest, uses that information to wake-up cameras and processing electronics and capture one or more images or video of the vehicles for surveillance or enforcement purposes.

An advantage of the surveillance device configuration according to exemplary embodiments is that the surveillance device can be small and portable and can be used for security surveillance or for automated photo traffic enforcement purposes.

In a photo enforcement configuration, the surveillance device may be further combined with speed measurement and/or visual signal light detection sensors.

The disclosed embodiments may include a solar powered, portable surveillance camera system, that includes: (i) a low power broad spectrum radar or optical disturbance sensor or similar to detect when a vehicle approaches, (ii) processing electronics and camera with quick wake up capability that can be woken up from power off or low power modes within about 100-200 ms, (iii) rapidly taking one or more images or video stream at a further downstream point from the detected area using an infrared sensitive camera that covers the appropriate lane or set of lanes as the detected vehicle such that the images are optimized to capture the license plate or the back of the vehicle, (iv) optionally taking further scene images in color for context and surrounding information, (v) a near-infrared or infrared flash that is suitable with the image sensor used and triggered synchronously with the camera aperture, (vi) optional algorithms that recognize whether there is likely a license plate in a given camera image and/or using license plate recognition algorithms to automatically recognize the license plate, (vii) optional wireless transmission to a server any of the following: the raw images, compressed images, only the license plate portion of the images, or the license plate text or other output from the recognition software, (viii) encrypting the wireless transmissions as needed, (ix) optionally, storing the data whether images, portion of images, or the license plate text inside the surveillance camera for a defined portion of time, optionally with encryption and/or compression, (x) optionally a GPS receiver, cellular modem or ISM band modems (xi) optionally, vehicle classification algorithms.

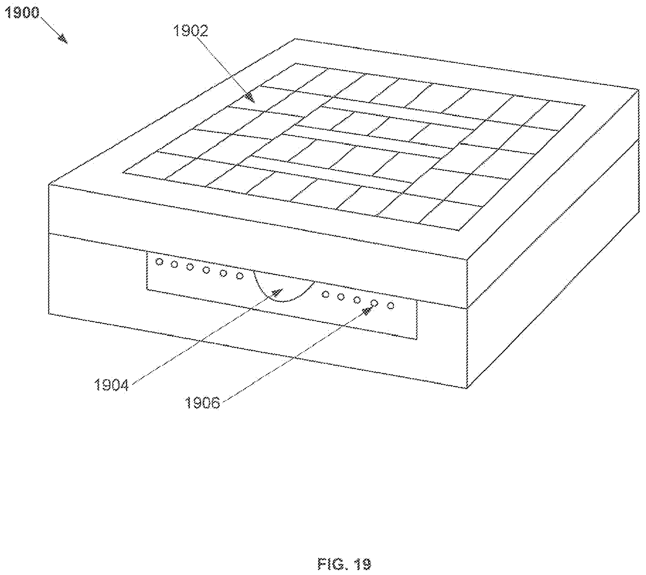

Figure 19 depicts a portable, solar powered surveillance camera 1900 in accordance with an exemplary embodiment. The camera 1900 may have a set of solar cells 1902 on its upper portion. Internally (not shown) these solar cells may be connected to a battery or a similar power storage device. A camera 1904 may be located on one side of the camera 1900. In various embodiments, more than one camera 1904 may be present. The camera 1904 also may have a variety of different capabilities. The camera 1900 may have other sensors besides the camera 1904. For example, a set of infrared LEDs 1906 may be present to provide night time flash lighting.

In a speed enforcement embodiment of the surveillance camera, an accurate and calibrated speed sensor that meets enforcement standards is electrically coupled with the surveillance camera and maybe collocated in the same enclosure or be electrically coupled from a nearby enclosure. The surveillance camera can use a single controller board and use buffered or non-buffered switches to switch between image sensors or imager head boards. Software drivers can run on the controller for each sensor or if the sensors are the same type or similar and configured as such, the same driver can be used with multiple cameras with the application software keeping track of which camera sensor is triggered at what point so that the image is stored in the correct location and marked correctly. A 1/3" or larger format optical sensor is used with a bit clock rate of at least 20 MHz.

In a red light camera enforcement embodiment of the surveillance camera, one or more visual light sensors that are pointed at corresponding traffic lights is electrically coupled with the surveillance camera and maybe collocated in the same enclosure or be electrically coupled from a nearby enclosure. The visual light sensors may have optical filters for red, orange, and green light to determine the state of the traffic signal under all lighting conditions. Appropriate hood and other blocks can be used to prevent interference, for example, from sunlight.

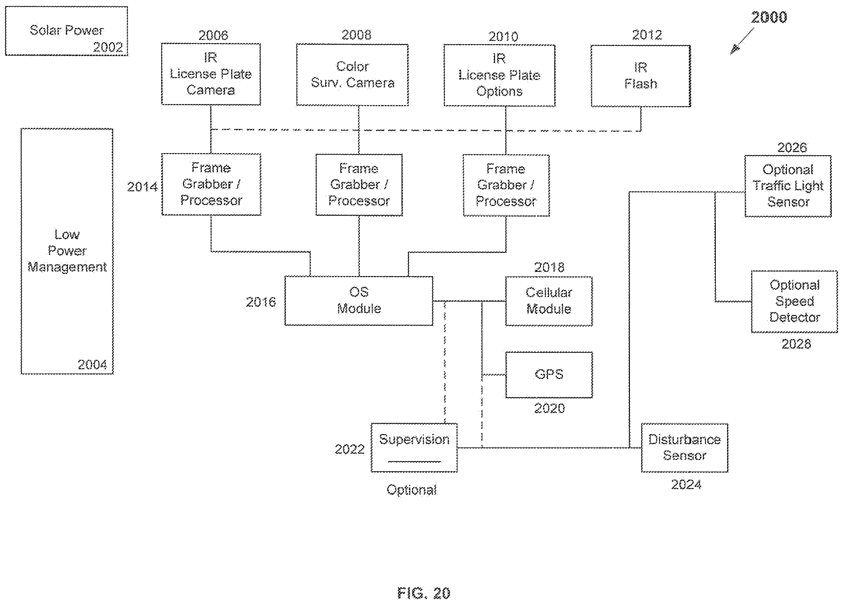

Figure 20 depicts a block diagram of a surveillance camera 2000 in accordance with an exemplary embodiment. Figure 20 may be a block diagram of the internal circuitry of the camera 1900. It should be appreciated that while the camera 2000 may be depicted with a variety of functionality, other functionality may be present or the camera 2000 may have less than the functionality depicted. In various embodiments, certain features may be disabled for certain applications. The features may be capable of being turned on/off through programming of the camera 2000.

The camera 2000 may have a solar power array 2002, a low power management device 2004, a IR license plate camera 2006, a color surveillance camera 2008, a IR license plate reader 2010, a IR flash system 2012, one or more frame grabber/processors, an operating system 2016 (which may be Windows or Linux based), a cellular module 2018 (which may have 3G and/or LTE and/or GPRS capability), a GPS module 2020, a supervision module 2022 (which may be optional), a disturbance sensor 2024, a traffic light sensor 2026 (which may be optional), and a speed detector 2028 (which may be optional).

The camera may be powered by the solar module 2002 and use the power management system 2004 that may be controlled by software. The processor module 2016 that executes program steps using that operating system is coupled with the frame grabber modules 2014 and the plurality of cameras, as depicted. The camera 2006 may be an infrared camera that is used for capturing license plate images suitable for automated license plate recognition; the camera 2008 may be used for producing color images of a wide scene to capture the overall environment or scene of a vehicle event; the camera 2010 may be an additional license plate camera that is optionally used for additional lanes. The infrared flash module 2012 may be used to generate infrared flash lighting in conjunction with image capture from cameras 2006 and 2010 for low lighting or night time conditions. The unit may also have the supervisory processor 2022 that is coupled with vehicle sensors that may include a disturbance sensor 2024 and wake up the processor. In addition, in red light or speed enforcement applications, the unit further may include a visual traffic light sensor 2026 to detect the state of traffic signals and a speed sensor that measures the vehicle speeds with sufficient accuracy required for enforcement purposes.

In a street sweeper enforcement embodiment, the sensor may be mounted at the front corners of the vehicle, but also be at the back corners. For each segment of the roadway, the vehicle can be pre-programmed to use either the left or right or both sensors or such action can be taken based on the direction of the vehicle and its GPS, navigation, or dead reckoning coordinates, or be manually controlled by the driver or an operator. If a sensor detects an object, a signal is generated to trigger a camera which may cause one or more images and/or video to be taken. The images and data can be uploaded to a server either in real-time and/or at the depot and assessed manually or by software processing to detect whether there was an actual violation. Both front facing and rear facing cameras and sensors can be used. This approach provides advantages over traditional LPR based street sweeper solutions, including lower cost, lower processing power, lower complexity and also may result lower false positives.

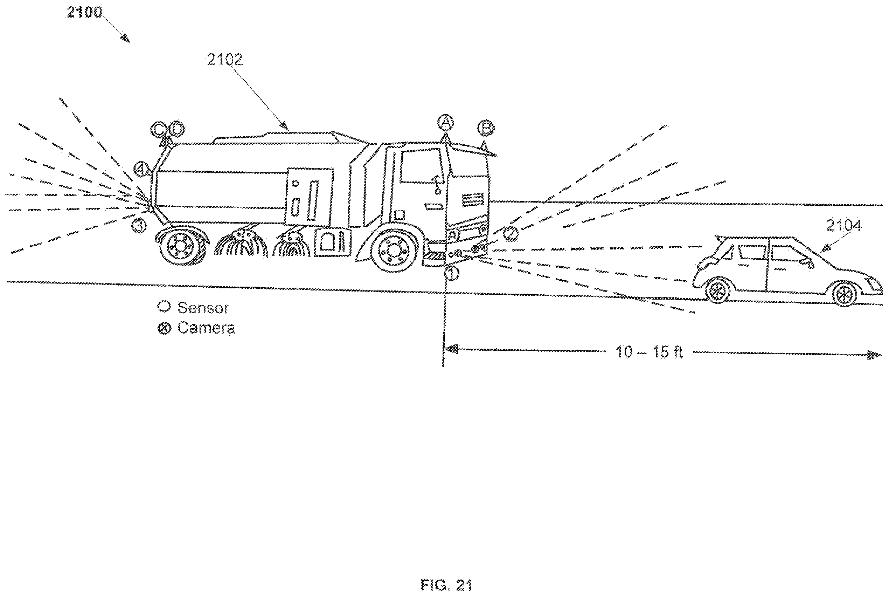

Figure 21 depicts a street sweeper photo enforcement application 2100 in accordance with an exemplary embodiment. A street sweeper 2102 may be equipped with detection systems as described to detect a car 2104 that, for example, is illegally parked.

As depicted in Figure 21, the street sweeper 2101 may have four devices 1, 2, 3, 4. Two (1, 2) may be mounted at the front corners of the street sweeper and two (3,4) may be mounted at the rear corners of the street sweeper. Alternate mounting locations A, B, C, D are also depicted. In various embodiments, A, B, C, and D may be image capture cameras. These locations may be in addition to or in place of any of devices 1, 2, 3, 4. The detection ranges may be, for example, 10-15 ft as depicted to the front and rear of the street sweeper. Detection ranges or more or less than these distances may be used. Each device may be a camera and a sensor as depicted (in Figure 21, the configuration of devices 1 and 2 can be seen while 3, 4 cannot; however, it should be appreciated that devices 3, 4 may have the same or similar configuration to devices 1, 2). The sensor portion may serve to sense a vehicle, such as car 2104, that is not supposed to be present (e.g., the vehicle is parked on the street when the street is supposed to be a no parking zone to support the street sweeping operation). The camera portion then may be used to image the vehicle, or at least the license plate portion of the vehicle, in support of issuing a ticket or citation to the registered owner of the vehicle. In support of issuing a ticket or citation, the street sweeper system, such as the camera portion, may be communicatively coupled to a applicable parking enforcement database or system. The communicative coupling may be be cellular and/or other wireless communication paths.

The sensor may serve to alert the operator of the street sweeper of the presences of the vehicle in the part of the street sweeper. In various embodiments, the street sweeper may be automated. In such cases, the sensor may serve to alert the control of the street sweeper that the street sweeper must alter course to avoid the vehicle. The front devices also may sense and image the vehicle and then the rear devices may do the same to get an image of the front and rear of the vehicle.

Various enforcement applications, such as red light, speed, and stop sign enforcement applications, can be simultaneously combined with the surveillance device.

The surveillance camera can have secure connectors accessible only to authorized personnel to connect a laptop and PDA (or other electronic device) for quick setup and diagnostics in the field. This enables a technician to ensure that the appropriate lanes are being covered by all the sensors, cameras, and light sensors as may apply, and verify the diagnostics and settings, such as speed thresholds, etc., are correctly set.

The surveillance camera can have a secure, quick fit mounting arrangement for mounting on the ground or nearby poles or other fixtures.

In various embodiments, the surveillance camera can have a disturbance and theft sensor that may report disturbance signal and/or current locations using its wireless communication means. The surveillance camera can have day and night modes that are switched based on an ambient light sensor or based on programmable time of day settings. The surveillance camera can be configured to record any combination of still images and video recordings suitable for the application and the cameras are oriented to capture all relevant details of the scene, such as traffic light or adjacent lanes, etc. In various embodiments, the focal length and aperture can be varied either manually or electrically or remotely adjusted in the field to optimize camera views.

The optical field disturbance sensor can be based on one or more linear complementary metal-oxide-semiconductor (CMOS) or other photo cell arrays or similar where the rate of change of light intensity in one or more pixels of the sensors are used to determine whether a vehicle or object is in the field of view. One or more individual photo cells with or without optical filters and lens optics can be used as a disturbance sensor. The determination of the object in the field of view can be based on absolute change in light captured by the photo cell or cells or relative change and timing of change between cells. This may help differentiate between changes due to clouds, sunlight, rain, etc., and natural changes vs. an automobile moving in a specific direction. Direction of travel of the automobile also can be determined using this method.

In various embodiments, infrared, Doppler, or thermal sensors can be used instead of or in combination with the broad spectrum radar or optical field disturbance sensor. Infrared allowance and/or cutoff filters using manual or electronic switching means can be used selectively for cameras based on day or night modes or whether the image being taken in a license plate image or a scene image. In various embodiments, image sensors with adjustable resolution, binning, and crop are used either in the imager chip or in the processing software to achieve optimal signal to noise, resolutions, and image sizes.

In various embodiments, the GPS location, time, and any other relevant information is overlaid on the photographic images and/or attached as metadata and/or coded suitably and imprinted in select pixels using a security pattern. In various embodiments, the data retained inside the surveillance camera or in the server is encrypted using one-way hashing or other techniques and may be deleted upon some events or a certain period of time passing. In various embodiments, to avoid having large centralized license plate database, the data are stored at each camera for a limited period of time, and the server application can initiate a query to get the relevant data or images, such as upon a manual request. For example, a query can be for license plates with a pattern say, "ABC" or similar or a "pickup truck with green color", etc., or for images with a certain time frame, and the surveillance camera can provide those data to the server. There are many applications for private entities or for local governments and home owners associations. The surveillance camera also can be commanded remotely to erase all its information in some applications.

The surveillance camera can be mounted at parking lot, garage, or driveway entrances and can be used in conjunction with vehicle identification sensors (with or without occupancy detection sensors) as security and/or secondary access control functions. For example, if the vehicle identification sensor has failed for some reason or if the motorist forgets to mount the vehicle identification sensor, the license plate recognized by the surveillance camera can be used to provide access or vice versa.

The surveillance camera, occupancy sensors, and other components can be used with a two-way audio communication system with a remote operator. For example, in a remotely operated parking garage, there can be a remote operate alerted as needed to a situation at the entrance of the garage; the remote operator can access the surveillance camera image and vehicle identification data as needed, and use a two way-communication enabled via telephone lines or voice over Internet or similar to communicate with the person at the entrance and assess the situation and take suitable actions. The remote operator can be alerted by the presence or persistence of the person, vehicle or object at the entrance, failure of the vehicle identification device, or under similar circumstances. In various embodiments, the surveillance camera and be tied to wired infrastructure for power and/or data communications.

In various embodiments, one or more surveillance cameras can be mounted on vehicles and can perform vehicle audits, stolen vehicle discovery, parking violation enforcement, and other functions as required.

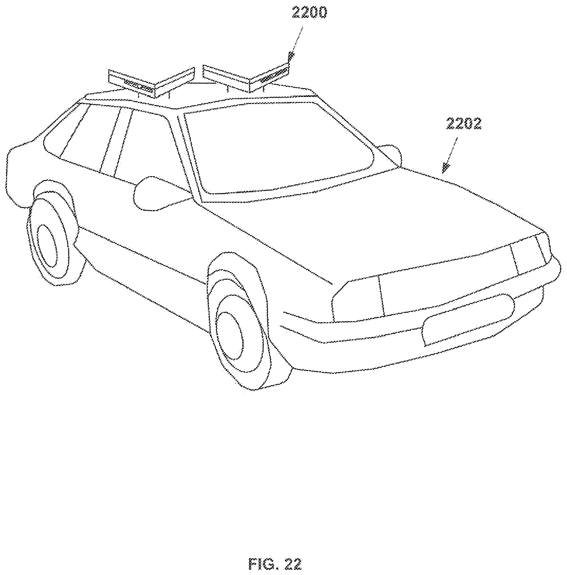

Figure 22 depicts a surveillance camera 2200 mounted on a vehicle 2202 in accordance with an exemplary embodiment. The vehicle 2202 may have a plurality of cameras mounted thereon to support vehicle enforcement operations, such as parking enforcement. The surveillance camera 2200 can use information provided by the roadside sensor network and navigation information from one or more sources to determine when to capture an image and from which camera. The surveillance camera 2200 can interface with the various sensors and systems described herein.

Various embodiments include a meterless parking system for citywide, on-street, or off-street parking in parking lots or garages. The meterless parking system can further combine surveillance cameras with parking space occupancy sensors, payments by phone or SMS or over the Internet, using pre-established accounts, post-pay options, issuing parking notices and fines by mail or similar means, placing registration holds, license or emission check holds, or other available penalties for delinquent patrons, cashless parking, scratch cards or other temporary currency equivalents that can be purchased in local areas, creating hotlists or blacklists of delinquent patrons or frequent violators and disseminating those lists to police, parking and/or other agencies.

In various embodiments, meterless parking can be implemented without the use of parking space occupancy sensors, but that may entail repeated runs of the surveillance camera system and generally are much lower in enforcement efficiency and officer productivity than with sensors. The advantages of broad spectrum radar for highly accurate occupancy and violation detection can be of benefit in meterless parking enforcement. The surveillance camera in this case may be used primarily for taking pictures of suspected violators.

These pictures and/or video of suspected violators can be analyzed in a backend, by an operator, to manually verify a violation and format and issue a notice that can be sent by regular mail, registered mail, or hand delivered to the violator. Such notices also can be electronically delivered to the violator. The parking space occupancy sensors can be setup with either marked or unmarked spaces with one or more antennas each. Unmarked spaces can be used in conjunction with a block level marking and signage to help determine the parking rates and restrictions for payment and enforcement purposes.

On-street and off-street enforcement can be combined with a vehicle mounted or handheld surveillance camera.

The surveillance camera also can be mounted on parking enforcement vehicles. The surveillance camera vehicles or operators can be routed to most efficiently capture violations using automated routing algorithms using including but not limited to genetic algorithms, neural network, point-to-multipoint, multipoint-to-multipoint routing algorithms and similar, using both current and future violation predictions based on a probabilistic models, real roadway or line of sight distances, and taking into account real time and/or historical travel times and prediction models of future travel times.

Exemplary embodiments may include the ability to pay within a certain amount of time after the parking period. In a meterless parking situation, where some patrons, for example, such as visitors, may not have preset accounts, payment mechanisms, or registration in a given city, these patrons may be able to make a payment after the fact within a given time period through any of the payment mechanism such as city designated centers, online portals with the city or a third party service provider, setup an account with a mobile payment service, etc. In this scenario, vehicles may be flagged as violation or potential violations, but no notice is issued for a designated time period, say for example, 10 days, and the patron can up to a week (for example) to make payment, identifying the vehicle using license plate number, time of day, and/or parking space or block number. If payment is made for the vehicle within the predetermined time period, the notice is removed from issuance and no or reduced penalties are applied.

In various embodiments, payment for parking can be made via SMS, mobile wallet providers, or dedicated mobile phone applications. The patron can have linked credit cards, debit cards, or bank account numbers that can be automatically charged per transaction or on a per period basis (for example, monthly), or can be setup as a bill to home option, where a monthly invoice is sent for all charges incurrent in the month along with any service fees if applicable. If payments are not made within given time periods, then violation notices, registration holds, hot listing, and collection activities can be initiated. Payments also can be made via telephone through interactive voice response systems or with human operators at call centers.

The payments can be based on any combination of specific space numbers, block numbers (with license plate or account numbers), simply for a specific amount via a cell phone or account number in which case the vehicle is identified by a license plate number which is linked to the cell phone or account number. By the time the time threshold for noticing starts, the payment system may consider this as valid payment if the specific vehicle can be identified that was paid for according to the parking restrictions for the space the vehicle is in. The identification of the specific vehicle can be derived from the space number or pre or post linked license plate number to cell phone or account numbers, etc. In some cases, a cell phone may be linked to more than one vehicle (or vice versa) and if the sequence of payments and violations, or lack thereof, detected in such a way there is ambiguity as to which vehicle was paid for, the city or parking entity can use appropriate business rules such as based on the time sequence of any payments or violations, or simply to give the maximum benefit of doubt to the patron. The city or parking agency may seek to limit the number of such linked vehicles and cell phones. For example, since people may be own 2 or 3 vehicles, each person can limit the number of cell phones and linked vehicles to 2 or 3, thus limiting opportunities to game the system. The parking systems described herein may be integrated with a variety of parking payment systems and payment processing systems in support of the various embodiments.

In many cases, the GPS system in the surveillance camera or vehicle may not be accurate enough to precisely image the spot automatically and it may be cumbersome to ask the vehicle operator to slow down and manually assist in imaging the space. In these cases, the surveillance camera may be configured to take pictures and/or video of a range of spaces near the violating vehicle such that there is a high likelihood that the violating space is captured and the images and/or video can be post-processed manually or automatically to find the violating vehicle and the remainder of the images can be discarded.

In various embodiments, the enforcement vehicle can be equipped with more than one surveillance camera to image both sides of the road.

The meterless parking methods can be implemented with any combination of guidance displays, payment mechanisms, sensors, surveillance cameras, and optionally two-way voice communication can be used by private parking space owners such as individual owners, apartment complexes, or office parking space owners to rent unused parking spaces that the individual owners own on a highly flexible schedule basis. For example, there may be one or more parking spaces near a busy commercial center or a sports arena, in a downtown area, or anywhere where there is parking demand and the spaces may go unused at a certain time. A web-based system where the owners or space operators can enter the space available times can be used to advertise the space vacancy using the guidance displays that may have alternate configurations for this application and may be of alpha numeric type. The parking space sensor can be used to detect when a vehicle parks at the space and there may be static or dynamic signage via the guidance display or an alternate display regarding payment instructions and rates. The payments can be made via the Internet using a credit card, by telephone or SMS using pre-linked accounts or fresh accounts created, by an interactive voice response application, talking to human operator at a call center, or any combination of these. The surveillance camera can optionally be used for security and audit purposes. The maximum length of stay, etc., are communicated to the motorist and implied and explicit contractual terms including towing beyond the maximum limits are communicated. If there is an overstay or a non-payment situation, a tow operator can be immediately alerted. In some cases, a grace period may be allowed. In some cases, the tow operator may be alerted to a potential tow situation before the expiry of the maximum stay period or the grace period since it may be critical, in a lot of cases, that the space is freed up for the owners in a short amount of time.

This method and its variants may open up additional unused parking capacity in congested areas, provide additional revenues to parking space owners and help ease parking shortages in critical areas. The availability of parking spaces can be advertised via the Internet and reservations can be made against them, for example, by prepaying. The reserved spaces may be removed from the guidance signage showing vacant spaces and if a non-authorized parker parks at a reserved space, he or she is alerted via display signage and perhaps even the two-way voice communication link with a remote operator. A tow company may be automatically or manually alerted. To ensure that the reservation holder is at the spot, the reservation holder can be given a code or can send an SMS once the holder have arrived, or the system can automatically send them an SMS or voice call and the holder respond back or indicate it is they who have parked in the space. Alternatively, or in addition, a remote operator may simply verify the license plate or the car type by viewing the surveillance camera image. A combination of these verification means maybe used to ensure that the reservation holder has arrived. The system may further send reminder texts or voice prompts to the reservation holder reminding them of the reservation, directions, maximum length of stay or any other pertinent information. The system may be used in conjunction with city or private enforcement personnel to replace or augment the surveillance camera functions. The occupancy sensors for this application can use ultrasonic, infrared, broad spectrum radar, FMCW or other narrow spectrum radar, laser ranging, magnetic, or other techniques.

Exemplary embodiments also may include an electronic wireless vehicle clamp device. While manual vehicle clamps are commonly used for security and for violation and scofflaw enforcement, there are some devices with electronic keypads. The keypads of these devices can become clogged with dirt or a code gets incorrectly entered and if the boot gets stolen, there is no way to track the boot, and there is no way for a remote operator to know their status. Heretofore, it has been difficult to create wireless versions of the same due to the high power consumption of the modems needed. The low power ISM band modems disclosed in the sensors, gateways, and guidance components of exemplary embodiments described above also can be used in an electronic boot device that contains its own battery to unlock wirelessly. The wireless capabilities of the boot can be used to send status and self-diagnostics, as well as track the boot for asset management and other purposes. In addition, the boot or clamp device can contain GPS sensors and theft prevention features, including a cellular modem that is woken up only when ISM band devices are not available, which can be used to report potential unauthorized movement of the clamp. The clamp may be placed on parked vehicles in enforced parking locations. These locations are likely to have compatible RF transceivers in meters, sensors, gateways, and guidance displays. The clamp may wake up to query the gateway or other device, for example, every 10 seconds to see if a communication is pending for the clamp. The clamp can receive communications that can be encrypted using symmetric and asymmetric key ciphers, unlock the device and report the status to the server through the gateway. Instruction to make payments and unlock also can be displayed or printed at a parking meter or available on a website that is labeled on the clamp.

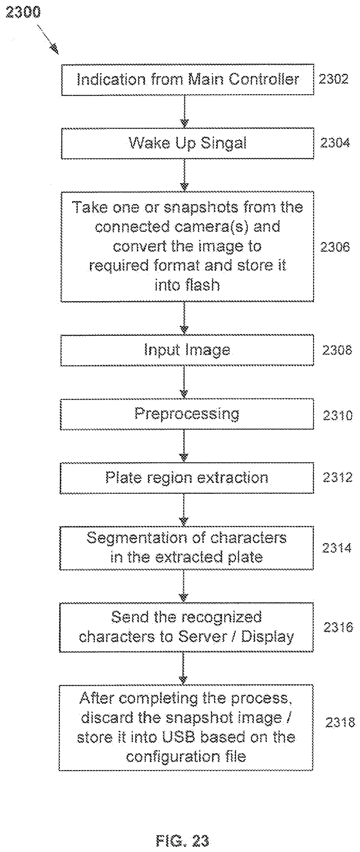

Figure 23 depicts a process flow 2300 for a surveillance camera subsystem in accordance with an exemplary embodiment. When a wake up signal is triggered at 2304 based on the location, timing, or other information from the main controller 2302, the subsystem is woken up in a fast manner, for example, in under 100ms, and one or more snapshots 2306 are taken from the connected camera(s). For example, the connected cameras may include a license plate and/or environment camera. The image formats may include JPG, BMP, and YUV. Other image formats may be possible. The camera(s) may have any type of resolution necessary to capture the appropriate detail. For example, 3 megapixels may be used. The resulting images may be input to the subsystem processing at 2308 and are first processed through a preprocessor module at 2310 to first determine the region of the image that contains a potential license plate at 2312. The plate region may then used to decipher whether the plate contains multiple characters at 2314 and send the extracted characters at 2316 to the backend server and optionally an in-vehicle display. The entire image and/or the license plate region and/or the extracted text may be stored locally at 2318 for a programmed length of time or discarded based on business rules.

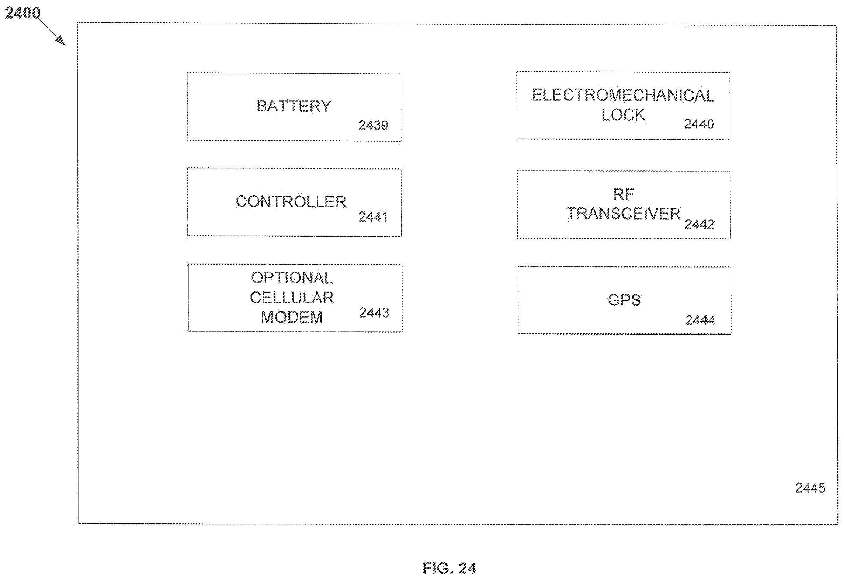

Figure 24 depicts an example schematic block diagram 2400 of a wireless boot control and management device 2433. The electromechanical lock 2440 serves to operate the boot lock and is powered by battery 2439 and is controlled by controller 2441, which uses RF transceiver 2442 to communicate. GPS 2444 is used by the controller for asset location and theft detection purposes and the optional cellular modem 2443 is used when the boot 2433 is out of range of an ISM network.

The embodiments of the present invention are not to be limited in scope by the specific embodiments described herein. Further, although some of the embodiments of the present disclosure have been described herein in the context of a particular implementation in a particular environment for a particular purpose, those of ordinary skill in the art should recognize that its usefulness is not limited thereto and that the embodiments of the present inventions can be beneficially implemented in any number of environments for any number of purposes. Accordingly, the claims set forth below should be construed in view of the full breadth and spirit of the embodiments of the present inventions as disclosed herein. While the foregoing description includes many details and specificities, it is to be understood that these have been included for purposes of explanation only, and are not to be interpreted as limitations of the invention. Many modifications to the embodiments described above can be made without departing from the spirit and scope of the invention.

Before going on to the claims, we will first present a series of clauses defining embodiments of the invention.

A parking management system, comprising:
a roadside unit having a vehicle occupancy sensor with a zone of detection that corresponds to an individual parking space;
a first RF transceiver having a first antenna configured to substantially radiate towards the individual parking space that is configured to communicate with an in-vehicle transceiver;
a second antenna configured to substantially radiate in a direction of one or more gateways, cellular towers, or parking meters, the direction supporting communication between the second antenna and the one or more of gateways, cellular towers, servers, or parking meters; and
a guidance display indicating a number of parking spaces available in a given zone or direction, wherein the guidance display is updated based on occupancy information for each individual parking space collected by the roadside unit.

The system of clause 1, further comprising:
an imaging camera system, including at least one imaging sensor, for collecting evidence of parking violations, that has an area of coverage associated with a plurality of parking spaces.

The system of clause 1, further comprising:
an in-vehicle device, having a battery operated RF transceiver, the in-vehicle device being configured to communicate with the roadside unit, and the in-vehicle device transmitting a periodic beacon with encoded data that is received by the roadside unit.

The system of clause 3, wherein the vehicle occupancy sensor is a time of flight radar sensor or a FMCW radar sensor.

The system of clause 1, wherein the roadside unit includes a radar sensor comprising an antenna radiating element mounted within a parking meter mechanism or housing located proximate the parking space that is configured to substantially radiate towards at least one of one or more zones of the parking space or its adjacent areas.

The system of clause 3, wherein the first RF transceiver is electrically coupled with an antenna switch and a plurality of antenna elements used for both directional communications with the in-vehicle device and the one or more of gateways, cellular towers, servers, or parking meters.

The system of clause 2, further comprising a list of unique vehicle identifiers to deny or give differential handling of the vehicle information, including wirelessly alerting authorities in case of a stolen or scofflaw vehicle, and the list being capable of remotely wirelessly being updated from a backend computer and being associated with the imaging camera system.

The system of clause 3, wherein the in-vehicle device includes a visual or auditory indicator to a vehicle operation indicating communications or range information with the roadside unit.

The system of clause 1, wherein the roadside unit is mounted on a pole, coupled with a parking meter by at least one of wired or wireless means, mounted at or under the road surface in a subterranean configuration, or mounted on a curb.

The system of clause 3, wherein a unique vehicle identifier is obtained from the in-vehicle device and is used to send location based information to a driver through an in-car navigation device or portable electronic device associated with the driver, using SMS, email, or other data transmissions, the information comprising guidance, location related information, parking related information, and promotional media.

An intersection traffic management system, comprising:
at least one first radar sensor, comprising a time of flight or FMCW radar sensor, positioned upstream of an approach to an intersection near locations where vehicle queues can form to detect the vehicle queue length of queues and clearance time of the detection includes one or more of vehicle count, vehicle type, and vehicle classification data;
an intersection controller wirelessly coupled with the at least one first radar sensor, either directly or through a gateway, to receive information regarding the vehicle queue to calculate a clearance time based on the received information, and
the intersection controller being configured to control a status of one or more signals at the intersection and sequence the one or more signals using the information provided by the at least one radar sensor to optimally route traffic through the intersection.

The system of clause 11, further comprising:
at least one second radar sensor positioned downstream of exits from the intersection to measure clearance distances and intersection clearance time.

The system of clause 12, further comprising:
an intersection video queue detection camera that is communicatively coupled to the intersection controller; and
wherein the intersection controller is configured to combine data from the at least one first radar sensor located upstream, the at least one second radar sensor located downstream, and the intersection video queue detection camera to estimate the length of queues and clearance time for the intersection.

The system of clause 12, further comprising:
one or more additional radar sensors having a plurality of respective detection zones that are configured to provide lane specific queue and clearance information to the intersection controller.

The system of clause 11, wherein the intersection controller comprises program logic to receive information regarding approaching transit or emergency vehicles, calculate queues and clearance times, and attempt to empty the queues ahead of the transit or emergency vehicle approach.

The system of clause 15, wherein the transit or emergency vehicle approach detection is performed using either wirelessly reported GPS location information or RF transceivers collocated with the sensors.

A system for railway crossing intersection management, comprising:
a first sensor, comprising a time of flight, FMCW, or Doppler radar sensor, configured to detect a train approaching a railway crossing intersection, the first sensor being installed in a location corresponding to at least one direction of train travel on a railway track;
a second sensor, comprising a time of flight or FMCW radar, optical, infrared, or thermal sensor, configured to detect vehicles, persons, or objects at the intersection;
a processor, that is configured to receive information from the first sensor and the second sensor, and that is further configured to calculate a potential access conflict or a collision possibility; and
one or more signals, located at the intersection, comprising at least one of a auditory signal and a visual signal, that is directed towards the railway crossing intersection.

The system of clause 17, wherein the at least one auditory or visual signal includes a first auditory or visual signal that is generated when a train is approaching the railway crossing intersection and no access conflict or potential collision is detected and a second auditory or visual signal that is generated when an access conflict or potential collision is detected.

The system of clause 17, further comprising:
a RF transceiver collocated with the first sensor to uniquely identify at least one of the carriages of the train and to wirelessly report the information to a backend computer system that is designed to verify railway carriages and train configuration.

The system of clause 17, wherein the second sensor is installed on a pole.

## Claims

1. A parking management system, comprising:
a roadside unit having a vehicle occupancy sensor with a zone of detection that corresponds to a parking space, the roadside unit comprising:
an imaging camera with an image processor to image the parking space, identify a license plate in the image of a vehicle at least partially in the space and recognize the license plate characters;
the imaging camera has a wakeup latency less than 500ms and is triggered by a vehicle sensor comprising a radar or infrared sensor with a transmit burst less than 10ns;
a solar panel charging a battery to provide at least portion of the energy needed for the roadside unit;
a wireless transceiver to communicate data from the roadside unit to a parking management system;

2. The system of claim 1, further comprising a housing to contain both the camera and the sensor;

3. The system of claim 1, wherein the sensor is housed in a separate enclosure than the camera and is wirelessly coupled to the camera system;

4. The system of claim 3, wherein the sensor is mounted on the vertical or horizontal face near the edge of a roadside curb;

5. The system of claim 1 further comprising:
an in-vehicle device, having a battery-operated RF transceiver, the in-vehicle device being configured to communicate with the roadside unit;
a delay element contained within at least one of the roadside unit and in-vehicle device comprising a fixed or known time delay, and configured to measure distance to the other unit based on the fixed or known time delay;
the in-vehicle device is associated with a unique identifier to identify the vehicle or user of the device.

6. The system of claim 5 wherein the in-vehicle device has audio and visual indicators to inform the user of accepted or denied parking privileges.

7. The system of claim 6 wherein the in-vehicle device has a manual user control to initiate a communication to authenticate the in-vehicle device for parking privileges.

8. The system of claim 6 wherein the in-vehicle device has an accelerometer to detect motion conditions of the in-vehicle device.

9. The system of claim 1, where in the roadside unit further comprises a reservation display to indicate a sufficiently unique identifier of a reserved vehicle in the space and indicate reservation condition of the space.

10. The system of claim 1, wherein the roadside unit comprises of a plurality of cameras to image two or more spaces and a plurality of sensors.

11. The system of claim 1 that further comprises a guidance display indication showing a representation of the occupancy condition of one or more parking spaces to a user not in the parking space, wherein the guidance display is updated based on occupancy information collected by the roadside unit.

12. The system of claim 9 that further comprises a reservations application to enable a user to find, reserve, and pay for a parking space in advance.

13. The system of claim 1 wherein the parking space is freely accessible without any physical barriers from a roadway.
